# EUROPÄISCHE PATENTSCHRIFT

(11) **EP 1 290 002 B1**
(45) Veröffentlichungstag und Bekanntmachung des Hinweises auf die Patenterteilung: **21.01.2004**
(21) Anmeldenummer: 01943413.3
(22) Anmeldetag: 19.05.2001
(51) Int. Cl.: C07F 5/00

(54) **ALS COKATALYSATOR GEEIGNETE CHEMISCHE PRODUKTE, VERFAHREN ZU IHRER HERSTELLUNG UND IHRE VERWENDUNG IN KATALYSATOR-SYSTEMEN ZUR HERSTELLUNG VON POLYOLEFINEN**
CHEMICAL PRODUCTS SUITED FOR USE AS CO-CATALYSTS, METHOD FOR THE PREPARATION THEREOF AND THEIR USE IN CATALYST SYSTEMS FOR PRODUCING POLYOLEFINS
PRODUITS CHIMIQUES POUVANT ETRE UTILISES COMME CO-CATALYSEURS, LEUR PROCEDE DE PREPARATION ET LEUR UTILISATION DANS DES SYSTEMES DE CATALYSE POUR PRODUIRE DES POLYOLEFINES

(30) Priorität: 24.05.2000 DE 10025412
(43) Veröffentlichungstag der Anmeldung: 12.03.2003
(73) Patentinhaber: Basell Polyolefine GmbH, 50389 Wesseling (DE)
(72) Erfinder: SCHOTTEK, Jörg, 60486 Frankfurt (DE)
(86) Internationale Anmeldenummer: PCT/EP2001/005752
(87) Internationale Veröffentlichungsnummer: WO 2001/090112

(56) Entgegenhaltungen:
- EP-A- 0 561 476
- EP-A- 0 687 682
- WO-A-00/64906
- JP-A- 3 271 295

## Beschreibung

Die vorliegende Erfindung betrifft als Cokatalysator geeignete chemische Produkte, Verfahren zu ihrer Herstellung und ihre Verwendung in Katalysatorsystemen zur Herstellung von Polyolefinen. Die Erfindung betrifft insbesondere solche chemische Produkte, die neutral aufgebaut sind und in Kombination mit einer Organoübergangsmetallverbindung ein Katalysatorsystem bilden können, welches vorteilhaft zur Polymerisation von Olefinen eingesetzt werden kann. Hierbei kann auf die Verwendung von Aluminoxanen wie Methylaluminoxan (MAO) als Cokatalysator verzichtet und dennoch eine hohe Katalysatoraktivität und gute Polymermorphologie erzielt werden.

Die Rolle von kationischen Komplexen bei der Ziegler-Natta-Polymerisation mit Metallocenen ist allgemein anerkannt (H.H. Brintzinger, D. Fischer, R. Mülhaupt, R. Rieger, R. Waymouth, Angew. Chem. 1995, 107, 1255-1283).

MAO als wirksamer Cokatalysator hat den Nachteil, dass es in hohem Überschuß eingesetzt werden muß. Es sind zwar modifizierte MAO-Cokatalysatoren beschrieben, wie z.B. in der WO99/30819, WO99/30820, WO99/30821 und JP-09-278817 Al. Diese Systeme weisen aber unzureichende Polymerisationsaktivitäten auf und müssen in hohem Überschuß verwendet werden.

Die Darstellung kationischer Übergangsmetallalkylkomplexe eröffnet den Weg für MAO-freie Katalysatoren mit vergleichbarer Aktivität, wobei der Cokatalysator nahezu stöchiometrisch eingesetzt werden kann.

Die Synthese von "Kationen-ähnlichen" Metallocen-Polymerisationskatalysatoren istin J. Am. Chem. Soc. 1991, 113, 3623 beschrieben. Ein Verfahren zur Herstellung von Salzen der allgemeinen Formel LMX⁺ XA⁻ nach dem oben beschriebenen Prinzip ist in EP-A-0 520 732 beschrieben.

EP-A-0 558 158 beschreibt zwitterionische Katalysatorsysteme, die aus Metallocendialkyl-Verbindungen und Salzen der Formel [R₃NH]⁺ [B(C₆H₅)₄]- dargestellt werden. Die Umsetzung eines solchen Salzes mit z.B. Cp₂ZrMe₂ liefert durch Protolyse unter Methanabspaltung intermediär ein Zirkonocenmethyl-Kation. Dieses reagiert über C-H-Aktivierung zum Zwitterion Cp₂Zr⁺-(m-C₆H₄)-BPh₃- ab. Das Zr-Atom ist dabei kovalent an ein Kohlenstoffatom des Phenylrings gebunden und wird über agostische wasserstoffbindungen stabilisiert. US-A-5,384,299 beschreibt zwitterionische Katalysatorsysteme, die aus Metallocendialkyl-Verbindungen und Salzen der Formel [R₃NH]⁺ [B(C₆F₅)₄]⁻ durch Protolyse dargestellt werden. Die C-H-Aktivierung als Folgereaktion unterbleibt dabei. In der EP-A-0 426 637 wird das Lewis-saure CPh₃⁺ Kation zur Abstraktion der Methylgruppe vom Metallzentrum eingesetzt. Als schwach koordinierendes Anion fungiert B(C₆F₅)₄⁻.

EP-A 561 476 offenbart als Cokatalysatoren geeignete modifizierte Polymethylaluminoxane, die durch Umsetzung von Trimethylaluminium, Wasser und einer organischen Verbindung, die mindestens ein elektronenreiches Heteroatom enthält, erhältlich sind.

Eine industrielle Nutzung von Metallocen-Katalysatoren fordert eine Heterogenisierung des Katalysatorsystems, um eine entsprechende Morphologie des resultierenden Polymers zu gewährleisten. Die Trägerung von kationischen Metallocen-Katalysatoren auf Basis der oben genannten Borat-Anionen ist in der WO 91/09882 beschrieben. Dabei wird das Katalysatorsystem, durch Aufbringen einer Dialkylmetallocen-Verbindung und einer BrØnsted-sauren, quartären Ammonium-Verbindung mit einem nichtkoordinierenden Anion wie Tetrakispentafluorphenylborat auf einem anorganischen Träger gebildet. Das Trägermaterial wird zuvor mit einer TrialkylaluminiumVerbindung modifiziert.

Nachteil dieses Trägerungsverfahren ist, daß nur ein geringer Teil des eingesetzten Metallocens durch Physisorbtion am Trägermaterial fixiert ist. Bei der Dosierung des Katalysatorsystems in den Reaktor kann das Metallocen leicht von der Trägeroberfläche abgelöst werden. Dies führt zu einer teilweise homogen verlaufenden Polymerisation, was eine unbefriedigende Morphologie des Polymers zur Folge hat. In der WO 96/04319 wird ein Katalysatorsystem beschrieben, in welchem der Cokatalysator kovalent an das Trägermaterial gebunden ist. Dieses Katalysatorsystem weist jedoch eine geringe Polymerisationsaktivität auf, zudem kann die hohe Empfindlichkeit der geträgerten kationischen Metallocen-Katalysatoren zu Problemen bei der Einschleusung in das Polymerisationssystem führen.

Aufgabe der vorliegenden Erfindung war es daher, ein chemisches Produkt bereitzustellen, das als Cokatalysator in Katalysatorsystemen eingesetzt werden kann, dabei die positiven Eigenschaften von MAO aufweist und außerdem die physisorbierte oder kovalente Fixierung am Trägermaterial ermöglicht. Das daraus gebildete Katalysatorsystem sollte sowohl vor dem Einschleusen in den Reaktor als auch erst im Polymerisationsautoklaven aktivierbar sein.

Die vorliegende Erfindung betrifft somit als Cokatalysator geeignete chemische Produkte, welche erhältlich sind durch Umsetzung einer Verbindung der Formel (I),

M¹R¹R²(R³)ₘ (I),

worin
- R¹, R², R³: gleich oder verschieden sind und ein Wasserstoffatom, C₁-C₂₀-Alkyl, C₁-C₂₀-Halogenalkyl, C₆-C₂₀-Aryl, C₆-C₂₀-Halogenaryl, C₇-C₄₀-Arylalkyl, C₇-C₄₀-Halogenarylalkyl, C₇-C₄₀-Alkylaryl oder C₇-C₄₀-Halogenalkylaryl,
- M¹: ein Element der II. oder III. Hauptgruppe des Periodensystems der Elemente, und
- m: 0 oder 1 bedeuten, wobei m gleich 1 ist, wenn M¹ ein Element der III. Hauptgruppe ist, und m gleich 0 ist, wenn M¹ ein Element der II. Hauptgruppe ist,
mit einer Verbindung der Formel (II),

(R⁴X)_{q}-(G) * (M²R⁵R⁶)_{g} (II),

in der sich an einem Grundkörper G heteroatomhaltige Substituenten R⁴X befinden, worin
- R⁴: gleich oder verschieden sind und Wasserstoff, C₁-C₂₀-Alkyl, C₁-C₂₀-Halogenalkyl, C₆-C₂₀-Aryl, C₆-C₂₀-Halogenaryl, C₇-C₄₀-Arylalky, C₇-C₄₀-Halogenarylalkyl, C₇-C₄₀-Alkylaryl, C₇-C₄₀-Halogenalkylaryl,
- X: ein Element der VI. Hauptgruppe des Periodensystems der Elemente,
- G: mindestens zweibindiges C₁-C₂₀-Halogenalkylen, C₆-C₄₀-Halogenarylen, C₇-C₄₀-Halogenarylalkylen, C₇-C₄₀-Halogenalkylarylen,
- M²: ein Element der VI. Hauptgruppe des Periodensystems der Elemente,
- R⁵, R⁶: unabhängig voneinander gleich oder verschieden sind und ein Wasserstoffatom, C₁-C₂₀-Alkyl, C₁-C₁₀-Alkoxy, C₂-C₁₀-Alkenyl, C₇-C₂₀-Arylalkyl, C₇-C₂₀-Alkylaryl, C₆-C₁₀-Aryloxy, C₁-C₁₀-Halogenalkyl,
- q: eine ganze Zahl zwischen 2 und 10, und
- g: eine ganze Zahl zwischen 1 und 10 ist.

Die Erfindung betrifft außerdem das Verfahren zur Herstellung dieses chemischen Produktes durch Umsetzung einer Verbindung der Formel (I),

M¹R¹R²(R³)ₘ (I),

worin
- R¹, R², R³: gleich oder verschieden sind und ein Wasserstoffatom, C₁-C₂₀-Alkyl, C₁-C₂₀-Halogenalkyl, C₆-C₂₀-Aryl, C₆-C₂₀-Halogenaryl, C₇-C₄₀-Arylalkyl, C₇-C₄₀-Halogenarylalkyl, C₇-C₄₀-Alkylaryl oder C₇-C₄₀-Halogenalkylaryl,
- M¹: ein Element der II. oder III. Hauptgruppe des Periodensystems der Elemente, und
- m: 0 oder 1 bedeuten, wobei m gleich 1 ist, wenn M¹ ein Element der III. Hauptgruppe ist, und m gleich 0 ist, wenn M¹ ein Element der II. Hauptgruppe ist,
mit einer Verbindung der Formel (II),

(R⁴x)_{q}-(G) * (M²R⁵R⁶)_{g} (II),

in der sich an einem Grundkörper G heteroatomhaltige Substituenten R⁴X befinden,
worin
- R⁴: gleich oder verschieden sind und Wasserstoff, C₁-C₂₀-Alkyl, C₁-C₂₀-Halogenalkyl, C₆-C₂₀-Aryl, C₆-C₂₀-Halogenaryl, C₇-C₄₀-Arylalky, C₇-C₄₀-Halogenarylalkyl, C₇-C₄₀-Alkylaryl, C₇-C₄₀-Halogenalkylaryl,
- X: ein Element der VI. Hauptgruppe des Periodensystems der Elemente,
- G: mindestens zweibindiges C₁-C₂₀-Halogenalkylen, C₆-C₄₀-Halogenarylen, C₇-C₄₀-Halogenarylalkylen, C₇-C₄₀-Halogenalkylarylen,
- M²: ein Element der VI. Hauptgruppe des Periodensystems der Elemente,
- R⁵, R⁶: unabhängig voneinander gleich oder verschieden sind und ein Wasserstoffatom, C₁-C₂₀-Alkyl, C₁-C₁₀-Alkoxy, C₂-C₁₀-Alkenyl, C₇-C₂₀-Arylalkyl, C₇-C₂₀-Alkylaryl, C₆-C₁₀-Aryloxy, C₁-C₁₀-Halogenalkyl,
- q: eine ganze Zahl zwischen 2 und 10, und
- g: eine ganze Zahl zwischen 1 und 10 ist.

Erfindungsgemäß werden vorzugsweise Verbindungen der Formel (I) eingesetzt, in der R¹, R² und R³ C₁-C₆-Alkyl-Gruppen sind. Hierbei sind R¹, R² und R³ besonders bevorzugt C₁-C₄-Alkyl-Gruppen. In Formel (I) ist M¹ vorzugsweise ein Element der III. Hauptgruppe des Periodensystems der Elemente, insbesondere Bor oder Aluminium. Ganz besonders bevorzugt ist Aluminium.

Besonders bevorzugte Aluminiumverbindungen der Formel (I) sind Trimethylaluminium, Triethylaluminium, Triisopropylaluminium, Trihexylaluminium, Trioctylaluminium, Tri-n-butylaluminium, Tri-n-propylaluminium und Triisoprenylaluminium. Hiervon sind Trimethylaluminium, Triethylaluminium und Triisopropylaluminium besonders bevorzugt.

Besonders bevorzugte Borverbindungen der Formel (I) sind Triethylboran und Boran mit verzweigten Alkylresten.

Bevorzugte Verbindungen der Formel (II) enthalten als Grundkörper G bevorzugt teilweise oder vollständig halogeniertes C₁-C₂₀-Halogenalkylen oder C₆-C₄₀-Halogenarylen, wobei als Halogen Chlor und/oder Fluor verwendet werden. Besonders bevorzugt ist G ein teilweise oder vollständig fluoriertes C₆-C₄₀-Arylen.

In Formel (II) ist X vorzugsweise Sauerstoff oder Schwefel und besonders bevorzugt Sauerstoff. In Formel (II) ist außerdem R⁴ vorzugsweise Wasserstoff oder C₁-C₂₀-Alkyl, besonders bevorzugt Wasserstoff.

In einer ganz besonders bevorzugten Ausführungsform der Erfindung ist q gleich 2.

In den Verbindungen der Formel (II) ist M² bevorzugt Sauerstoff oder Schwefel, insbesondere Sauerstoff. R⁵ und R⁶ bedeuten bevorzugt Wasserstoff oder C₁-C₂₀-Alkyl, ganz besonders bevorzugt Wasserstoff. Die ganze Zahl g nimmt vorzugsweise Werte im Bereich von 1 bis 5 und besonders bevorzugt 1 oder 2 an. In einer ganz besonders bevorzugten Ausführungsform der Erfindung ist g gleich 1.

In den Verbindungen der Formel (II) ist (M²R⁵R⁶)_{g} vorzugsweise Wasser oder ein Alkohol. Besonders bevorzugt sind hierbei Wasser, Methanol, Ethanol und verzweigte Alkohole. Ganz besonders bevorzugt wird Wasser eingesetzt.

Besonders bevorzugte Verbindungen der Formel (II), in denen G ein teilweise oder vollständig fluorierten C₆-C₄₀-Arylen ist, tragen als Rest R⁴X zwei bis acht Hydroxylgruppen.

Nicht limitierende Beispiele für die chemischen Verbindungen der Formel (II) sind:
4, 4' Dihydroxyoctafluorodiphenyl * (s*H₂O), 4, 3' Dihydroxyoctafluorodiphenyl * (s*H₂O), 4, 5' Dihydroxyoctafluorodiphenyl * (s*H₂O), 4, 6' Dihydroxyoctafluoro-diphenyl * (s*H₂O), 4, 7' Dihydroxyoctafluorodiphenyl * (s*H₂O), 4, 8' Dihydroxyoctafluorodiphenyl * (s*H₂O), 1, 2 Dihydroxyoctafluorodiphenyl * (s*H₂O), 1, 3 Dihydroxyoctafluorodiphenyl * (s*H₂O), 4, 4' Dihydroxyheptafluorodiphenyl * (s*H₂O), 4, 3' Dihydroxyheptafluorodiphenyl * (s*H₂O), 4, 5' Dihydroxyheptafluoro-diphenyl * (s*H₂O), 4, 6' Dihydroxyheptafluorodiphenyl * (s*H₂O),
4, 7' Dihydroxyheptafluorodiphenyl * (s*H₂O), 4, 8' Dihydroxyheptafluorodiphenyl * (s*H₂O), 1, 2 Dihydroxyheptafluorodiphenyl * (s*H₂O), 1, 3 Dihydroxyheptafluoro-diphenyl * (s*H₂O), 4, 4' Dihydroxyhexafluorodiphenyl * (s*H₂O), 4, 3' Dihydroxyhexafluorodiphenyl * (s*H₂O), 4, 5' Dihydroxyhexafluorodiphenyl * (s*H₂O), 4, 6' Dihydroxyhexafluorodiphenyl * (s*H₂O), 4, 7' Dihydroxyhexafluorodiphenyl * (s*H₂O), 4, 8' Dihydroxyhexafluorodiphenyl * (s*H₂O), 1, 2 Dihydroxyhexafluoro-diphenyl * (s*H₂O), 1, 3 Dihydroxyhexafluorodiphenyl * (s*H₂O),
4, 4' Dihydroxypentafluorodiphenyl * (s*H₂O), 4, 3' Dihydroxypentafluorodiphenyl * (s*H₂O), 4, 5' Dihydroxypentafluorodiphenyl * (s*H₂O), 4, 6' Dihydroxypentafluoro-diphenyl * (s*H₂O), 4, 7' Dihydroxypentafluorodiphenyl * (s*H₂O), 4, 8' Dihydroxypentafluorodiphenyl * (s*H₂O), 1, 2 Dihydroxypentafluorodiphenyl * (s*H₂O), 1, 3 Dihydroxypentafluorodiphenyl * (s*H₂O), 4, 4' Dihydroxyoctachlorodiphenyl * (s*H₂O), 4, 3' Dihydroxyoctachlorodiphenyl * (s*H₂O),
4, 5' Dihydroxyoctachlorodiphenyl * (s*H₂O), 4, 6' Dihydroxyoctachlorodiphenyl * (s*H₂O), 4, 7' Dihydroxyoctachlorodiphenyl * (s*H₂O), 4, 8' Dihydroxyoctachloro-diphenyl * (s*H₂O), 1, 2 Dihydroxyoctachlorodiphenyl * (s*H₂O), 1, 3 Dihydroxyoctachlorodiphenyl * (s*H₂O), 4, 4' Dihydroxyheptachlorodiphenyl * (s*H₂O), 4, 3' Dihydroxyheptachlorodiphenyl * (s*H₂O),
4, 5' Dihydroxyheptachlorodiphenyl * (s*H₂O), 4, 6' Dihydroxyheptachlorodiphenyl * (s*H₂O), 4, 7' Dihydroxyheptachlorodiphenyl * (s*H₂O), 4, 8' Dihydroxyheptachloro-diphenyl * (s*H₂O), 1, 2 Dihydroxyheptachlorodiphenyl * (s*H₂O), 1, 3 Dihydroxyheptachlorodiphenyl * (s*H₂O), 4, 4' Dihydroxyhexachlorodiphenyl * (s*H₂O), 4, 3' Dihydroxyhexachlorodiphenyl * (s*H₂O), 4, 5' Dihydroxyhexachlorodiphenyl * (s*H₂O), 4, 6' Dihydroxyhexachlorodiphenyl * (s*H₂O), 4, 7' Dihydroxyhexachlorodiphenyl * (s*H₂O), 4, 8' Dihydroxyhexachloro-diphenyl * (s*H₂O), 1, 2 Dihydroxyhexachlorodiphenyl * (s*H₂O), 1, 3 Dihydroxyhexachlorodiphenyl * (s*H₂O), 4, 4' Dihydroxypentächlorodiphenyl * (s*H₂O), 4, 3' Dihydroxypentachlorodiphenyl * (s*H₂O), 4, 5' Dihydroxypentachloro-diphenyl * (s*H₂O), 4, 6' Dihydroxypentachlorodiphenyl * (s*H₂O),
4, 7' Dihydroxypentachlorodiphenyl * (s*H₂O), 4, 8' Dihydroxypentachlorodiphenyl * (s*H₂O), 1, 2 Dihydroxypentachlorodiphenyl * (s*H₂O), 1, 3 Dihydroxypentachloro-diphenyl * (s*H₂O), 1, 8 Dihydroxyhexafluoronaphtalin * (s*H₂O), 1, 7 Dihydroxyhexafluoronaphtalin * (s*H₂O), 1, 6 Dihydroxyhexafluoronaphtalin* (s*H₂O), 1, 7 Dihydroxyhexafluoronaphtalin* (s*H₂O), 1, 5 Dihydroxyhexafluoronaphtalin* (s*H₂O), 1, 4 Dihydroxyhexafluoronaphtalin* (s*H₂O), 1, 3 Dihydroxyhexafluoro-naphtalin* (s*H₂O), 1, 2 Dihydroxyhexafluoronaphtalin* (s*H₂O), 1, 8 Dihydroxyhexachloronaphtalin* (s*H₂O), 1, 7 Dihydroxyhexachloronaphtalin* (s*H₂O), 1, 6 Dihydroxyhexachloronaphtalin* (s*H₂O), 1, 7 Dihydroxyhexachloro-naphtalin* (s*H₂O), 1, 5 Dihydroxyhexachloronaphtalin* (s*H₂O), 1, 4 Dihydroxyhexachloronaphtalin* (s*H₂O), 1, 3 Dihydroxyhexachloronaphtalin* (s*H₂O), 1, 2 Dihydroxyhexachloronaphtalin* (s*H₂O), 1, 8 Dihydroxypentafluoro-naphtalin* (s*H₂O), 1, 7 Dihydroxypentafluoronaphtalin* (s*H₂O), 1, 6 Dihydroxypentafluoronaphtalin* (s*H₂O), 1, 7 Dihydroxypentafluoronaphtalin* (s*H₂O), 1, 5 Dihydroxypentafluoronaphtalin* (s*H₂O), 1, 4 Dihydroxypentafluoro-naphtalin, * (s*H₂O) 1, 3 Dihydroxypentafluoronaphtalin* (s*H₂O), 1, 2 Dihydroxypentafluoronaphtalin* (s*H₂O), 1, 8 Dihydroxytetrakisfluoronaphtalin* (s*H₂O), 1, 7 Dihydroxytetrakisfluoronaphtalin* (s*H₂O), 1, 6 Dihydroxytetrakisfluoronaphtalin* (s*H₂O), 1, 7 Dihydroxytetrakisfluoronaphtalin* (s*H₂O), 1, 5 Dihydroxytetrakisfluoronaphtalin* (s*H₂O), 1, 4 Dihydroxytetrakisfluoronaphtalin* (s*H₂O), 1, 3 Dihydroxytetrakisfluoronaphtalin* (s*H₂O), 1, 2 Dihydroxytetrakisfluoronaphtalin* (s*H₂O), 1, 2 Dihydroxy- 3, 4, 5, 6, 7, 8, 9, 10, 11, 12-decafluorotriphenylen* (s*H₂O), 1, 3 Dihydroxy- 2, 4, 5, 6, 7, 8, 9, 10, 11, 12-decafluorotriphenylen* (s*H₂O), 1, 4 Dihydroxy- 2, 3, 5, 6, 7, 8, 9, 10, 11, 12-decafluorotriphenylen* (s*H₂O), 1, 5 Dihydroxy- 2, 3, 4, 6, 7, 8, 9, 10, 11, 12-decafluorotriphenylen* (s*H₂O), 1, 6 Dihydroxy- 2, 3, 4, 5, 7, 8, 9, 10, 11, 12-decafluorotriphenylen* (s*H₂O), 1, 7 Dihydroxy- 2, 3, 4, 5, 6, 8, 9, 10, 11, 12-decafluorotriphenylen* (s*H₂O), 1, 8 Dihydroxy- 2, 3, 4, 5, 6, 7, 9, 10, 11, 12-decafluorotriphenylen* (s*H₂O), 1, 9 Dihydroxy- 2, 3, 4, 5, 6, 7, 8, 10, 11, 12-decafluorotriphenylen* (s*H₂O), 1, 10 Dihydroxy- 2, 3, 4, 5, 6, 7, 8, 9, 11, 12-decafluorotriphenylen* (s*H₂O), 1, 11 Dihydroxy- 2, 3, 4, 5, 6, 7, 8, 9, 10, 12-decafluorotriphenylen* (s*H₂O), 1, 12 Dihydroxy- 2, 3, 4, 5, 6, 7, 8, 9, 10, 11, 12-decafluorotriphenylen* (s*H₂O), 1, 9 Dihydroxynonafluoroanthracen, 1, 2 Dihydroxynonafluoroanthracen* (s*H₂O), 1, 3 Dihydroxynonafluoroanthracen* (s*H₂O), 1, 4 Dihydroxynonafluoroanthracen* (s*H₂O), 1, 5 Dihydroxynonafluoroanthracen* (s*H₂O), 1, 6 Dihydroxynonafluoroanthracen* (s*H₂O), 1, 7 Dihydroxynonafluoroanthracen* (s*H₂O), 1, 8 Dihydroxynonafluoroanthracen* (s*H₂O), 1, 9 Dihydroxynonachloroanthracen* (s*H₂O), 1, 3 Dihydroxynonachloroanthracen* (s*H₂O), 1, 4 Dihydroxynonachloroanthracen* (s*H₂O), 1, 5 Dihydroxynonachloroanthracen* (s*H₂O), 1, 6 Dihydroxynonachloroanthracen* (s*H₂O), 1, 7 Dihydroxynonachloroanthracen* (s*H₂O) , 1, 8 Dihydroxynonachloroanthracen* (s*H₂O), 1, 9 Dihydroxyoctafluoroanthracen*(s*H₂O), 1, 2 Dihydroxyoctafluoro-anthracen* (s*H₂O), 1, 3 Dihydroxyoctafluoroanthracen* (s*H₂O), 1, 4 Dihydroxyoctafluoroanthracen* (s*H₂O), 1, 5 Dihydroxyoctafluoroanthracen* (s*H₂O), 1, 6 Dihydroxyoctafluoroanthracen* (s*H₂O), 1, 7 Dihydroxyoctafluoroanthracen* (s*H₂O), 1, 8 Dihydroxyoctafluoroanthracen* (s*H₂O), 1, 9 Dihydroxyheptafluoroanthrace*(s*H₂O), 1, 2 Dihydroxyheptafluoroanthracen* (s*H₂O), 1, 3 Dihydroxyheptafluoroanthracen* (s*H₂O), 1, 4 Dihydroxyheptafluoro-anthracen* (s*H₂O), 1, 5 Dihydroxyheptafluoroanthracen* (s*H₂O), 1, 6 Dihydroxyheptafluoroanthracen* (s*H₂O), 1, 7 Dihydroxyheptafluoroanthracen* (s*H₂O), 1, 8 Dihydroxyheptafluoroanthracen* (s*H₂O), 1, 9 Dihydroxyhexafluoro-anthracen* (s*H₂O), 1, 2 Dihydroxyhexanfluoroanthracen* (s*H₂O), 1, 3 Dihydroxyhexafluoroanthracen* (s*H₂O), 1, 4 Dihydroxyhexafluoroanthracen* (s*H₂O), 1, 5 Dihydroxyhexanfluoroanthracen* (s*H₂O), 1, 6 Dihydroxyhexafluoroanthracen* (s*H₂O), 1, 7 Dihydroxyhexafluoroanthracen* (s*H₂O), 1, 8 Dihydroxyhexafluoroanthracen* (s*H₂O),
1, 9 Dihydroxynonafluorophenanthren*(s*H₂O), 1, 2 Dihydroxynonafluoro-phenanthren* (s*H₂O), 1, 3 Dihydroxynonafluorophenanthren* (s*H₂O), 1, 4 Dihydroxynonafluorophenanthren* (s*H₂O), 1, 5 Dihydroxynonafluorophenanthren* (s*H₂O), 1, 6 Dihydroxynonafluorophenanthren* (s*H₂O), 1, 7 Dihydroxynonafluoro-phenanthren* (s*H₂O), 1, 8 Dihydroxynonafluorophenanthren* (s*H₂O), 1, 9 Dihydroxynonachlorophenanthren* (s*H₂O), 1, 3 Dihydroxynonachlorophenanthren* (s*H₂O), 1, 4 Dihydroxynonachlorophenanthren* (s*H₂O), 1, 5 Dihydroxynonachloro-phenanthren* (s*H₂O), 1, 6 Dihydroxynonachlorophenanthren* (s*H₂O), 1, 7 Dihydroxynonachlorophenanthren* (s*H₂O), 1, 8 Dihydroxynonachlorophenanthren* (s*H₂O), 1, 9 Dihydroxyoctafluorophenanthren* (s*H₂O), 1, 2 Dihydroxyoctafluoro-phenanthren* (s*H₂O), 1, 3 Dihydroxyoctafluorophenanthren* (s*H₂O), 1, 4 Dihydroxyoctafluorophenanthren* (s*H₂O), 1, 5 Dihydroxyoctafluorophenanthren* (s*H₂O), 1, 6 Dihydroxyoctafluorophenanthren* (s*H₂O), 1, 7 Dihydroxyoctafluorophenanthren* (s*H₂O), 1, 8 Dihydroxyoctafluorophenanthren* (s*H₂O), 1, 9 Dihydroxyheptafluorophenanthren * (s*H₂O), 1, 2 Dihydroxyheptafluoro-phenanthren* (s*H₂O), 1, 3 Dihydroxyheptafluorophenanthren* (s*H₂O), 1, 4 Dihydroxyheptafluorophenanthren* (s*H₂O), 1, 5 Dihydroxyheptafluorophenanthren*. (s*H₂O), 1, 6 Dihydroxyheptafluorophenanthren* (s*H₂O), 1, 7 Dihydroxyheptafluoro-phenanthren* (s*H₂O), 1, 8 Dihydroxyheptafluorophenanthren* (s*H₂O), 1, 9 Dihydroxyhexafluorophenanthren* (s*H₂O), 1, 2 Dihydroxyhexanfluorophenanthren* (s*H₂O), 1, 3 Dihydroxyhexafluorophenanthren* (s*H₂O), 1, 4 Dihydroxyhexafluorophenanthren* (s*H₂O), 1, 5 Dihydroxyhexanfluorophenanthren* (s*H₂O), 1, 6 Dihydroxyhexafluorophenanthren* (s*H₂O), 1, 7 Dihydroxyhexafluoro-phenanthren* (s*H₂O), 1, 8 Dihydroxyhexafluorophenanthren* (s*H₂O),
4, 5, 4' Trihydroxyheptafluorodiphenyl * (s*H₂O), 4, 5, 3' Trihydroxyheptafluorodiphenyl * (s*H₂O), 4, 5, 5' Trihydroxyheptafluorodiphenyl * (s*H₂O), 4, 5, 6' Trihydroxyheptafluorodiphenyl * (s*H₂O), 3, 4, 5', 7' Tetrahydroxyhexafluorodiphenyl * (s*H₂O), 3, 4, 6', 8' Tetrahydroxyhexafluorodiphenyl * (s*H₂O), 3, 5, 5', 7 Tetrahydroxyhexafluorodiphenyl * (s*H₂O), 3, 5, 3', 5' Tetrahydroxyhexafluorodiphenyl * (s*H₂O),
wobei s bevorzugt 1, 2, 3, 4, 5, 6, 7, 8, 9, 10 sein kann.

Die Erfindung betrifft außerdem ein geträgertes Katalysatorsystem, in welchem die durch Umsetzung von Verbindungen der Formel (I) und Verbindungen der Formel (II) erhältlichen chemischen Produkte als Cokatalysator eingesetzt werden und ein Verfahren zur Herstellung dieses Katalysatorsystems. Gegenstand der Erfindung ist außerdem ein Verfahren zur Herstellung von Polyolefinen durch Polymerisation, in dem die erfindungsgemäßen Katalysatorsysteme eingesetzt werden.

Die erfindungsgemäße Umsetzung von Verbindungen der Formel (I) und Verbindungen der Formel (II) zum erfindungsgemäßen chemischen Produkt erfolgt im allgemeinen nach folgender Vorgehensweise.

Zunächst können eine oder mehrere Verbindungen der Formel (I) in einem Reaktionsgefäß vorgelegt werden. Die Verbindungen können entweder in einem Lösungsmittel gelöst oder suspendiert sein, oder aber auch in Substanz vorliegen. Als Lösungsmittel dienen aliphatische oder aromatische Kohlenwasserstoffe wie n-Pentan, Isopentan, n-Hexan, n-Heptan, Cyclohexan, Isododekan, n-Octan, n-Nonan, n-Decan, Petrolether, Toluol, Benzol, o-Xylol, m-Xylol, p-xylol, 1,2,3-Trimethylbenzol, 1,2,4-Trimethylbenzol, 1,2,5-Trimethylbenzol, 1,3,5-Trimethylbenzol, Ethylbenzol, Propylbenzol etc. sowie Ether, wie Diethylether, Methyl-tert-butylether, Dimethoxyethan, Diisopropylether, Di-n-butylether, Anisol oder deren Mischungen. Besonders bevorzugt sind hiervon aromatische Kohlenwasserstoffe, insbesonaere Toluol, o-Xylol, m-Xylol, p-Xylol, 1,2,3-Trimethylbenzol, 1,2,4-Trimethylbenzol, 1,2,5-Trimethylbenzol und 1,3,5-Trimethylbenzol. Die Vorlage erfolgt im allgemeinen bei Temperaturen zwischen -100°C und 300°C, bevorzugt zwischen - 80°C und 200°C, insbesondere bevorzugt bei Temperaturen zwischen 20°C und 150°C. Die Verbindung der Formel (I) liegt vorteilhafterweise in flüssiger Phase vor.

Anschließend kann die Zugabe einer oder mehrerer Verbindungen der Formel (II) erfolgen. Die Verbindungen der Formel (II) können ebenfalls in einem Lösungsmittel gelöst oder suspendiert sein aber auch in Substanz vorliegen. Als Lösungsmittel dienen die bereits oben beschriebenen, vorzugsweise wird das gleiche Lösungsmittel verwendet. Die Zugabe kann über einen Zeitraum von 1 Minute bis zu 96 Stunden erfolgen. Bevorzugt ist eine Zugabe innerhalb von 10 Minuten bis zu 8 Stunden. Die Temperatur der Vorlage liegt bei der Zugabe zwischen -100°C und 200°C. Bevorzugt sind Temperaturen zwischen -80°C und 150°C. Besonders bevorzugt sind Temperaturen zwischen 20°C und 150°C. Die Temperatur wird im allgemeinen so gewählt, daß zumindest ein Reaktionspartner in flüssiger Phase vorliegen. Die anschließende Reaktionstemperatur liegt vorzugsweise im Temperaturbereich von 20°C bis 150°C. Die Umsetzung kann bei Normaldruck oder bei erhöhtem Druck durchgeführt werden, was jedoch entsprechende Reaktoren voraussetzt. Das molare Verhältnis, in dem die Verbindungen der Formel (I) und (II) zusammengegeben werden, bezogen auf eingesetzter Menge M¹ der Verbindugen der Formel (I), liegt im allgemeinen zwischen 1 : 1000 und 1 : 0.01.

Bevorzugt beträgt das molare Verhältnis zwischen Verbindungen der Formel (I) und (II) zu eingesetzter Menge M¹, gemäß Formel (I), zwischen 1 :100 und 1 : 0.1. Besonders bevorzugt ist eine stöchiometrische Umsetzung bezogen auf die Verbindungen der Formel (I) und (II). Das Molverhältnis hängt hierbei von der Zahl g der Gruppen (M²R⁵R⁶) ab. Die hier gemachten Angaben gehen von einem Wert von 1 für g aus. Bei höheren Werten für g kann entsprechend weniger Verbindung (II) eingesetzt werden.

Die vorliegende Erfindung betrifft außerdem ein Verfahren zur Herstellung der als Cokatalysatoren geeigneten Produkte, bei dem Verbindungen der Formel (I) mit Verbindungen der Formel (II) umgesetzt werden.

Die vorliegende Erfindung betrifft außerdem ein Katalysatorsystem, welches vorzugsweise
A) mindestens eine Organoübergangsmetallverbindung,
B) optional mindestens ein Hauptgruppenalkyl,
C) optional mindestens eine Trägerkomponente, und
D) mindestens ein durch Umsetzung von Verbindungen der Formel (I) mit Verbindungen der Formel (II) erhältliches chemisches Produkt, das vorzugsweise Verbindungen der Formel (III) enthält,
umfaßt.

Als Organoübergangsmetallverbindung A) werden vorzugsweise Metallocenverbindungen eingesetzt. Diese können z.B. verbrückte oder unverbrückte Biscyclopentadienylkomplexe sein, wie sie beispielsweise in EP-A-0 129 368, EP-A-0 561 479, EP-A-0 545 304 und EP-A-0 576 970 beschrieben sind, Monocyclopentadienylkomplexe, wie verbrückte Amidocyclopentadienylkomplexe, die beispielsweise in EP-A-0 416 815 beschrieben sind, mehrkernige Cyclopentadienylkomplexe wie beispielsweise in EP-A-0 632 063 beschrieben, n-Ligand-substituierte Tetrahydropentalene wie beispielsweise in EP-A-0 659 758 beschrieben oder π-Ligand-substituierte Tetrahydroindene wie beispielsweise in EP-A-0 661 300 beschrieben. Außerdem können organometallverbindungen eingesetzt werden, in denen der komplexierende Ligand keine Cyclopentadienyl-Liganden enthält. Beispiele hierfür sind Diamin-Komplexe der III. und IV. Nebengruppe des Periodensystems der Elemente, wie sie z.B. bei D.H. McConville, et al, Macromolecules, 1996, 29, 5241 und D.H. McConville, et al, J. Am. Chem. Soc., 1996, 118, 10008 beschrieben sind. Außerdem können Diimin-Komplexe der VIII. Nebengruppe des Periodensystems der Elemente (z.B. Ni²⁺ oder Pd²⁺ Komplexe), wie sie von Brookhart et al, J. Am. Chem. Soc. 1995, 117, 6414 und , Brookhart et al, J. Am. Chem. Soc., 1996, 118, 267 beschrieben sind, eingesetzt werden. Ferner lassen sich 2,6-Bis(imino)pyridyl-Komplexe der VIII. Nebengruppe des Periodensystems der Elemente (z.B. Co²⁺ oder Fe²⁺ Komplexe), wie sie bei Brookhart et al, J. Am. Chem. Soc. 1998, 120, 4049 und Gibson et al, Chem. Commun. 1998, 849 beschrieben sind, einsetzen. Weiterhin können Metallocenverbindungen eingesetzt werden, deren komplexierender Ligand Heterocyclen enthält. Beispiele hierfür sind in WO 98/22486 beschrieben.

Bevorzugte Metallocenverbindungen sind unverbrückte oder verbrückte Verbindungen der Formel (IV), 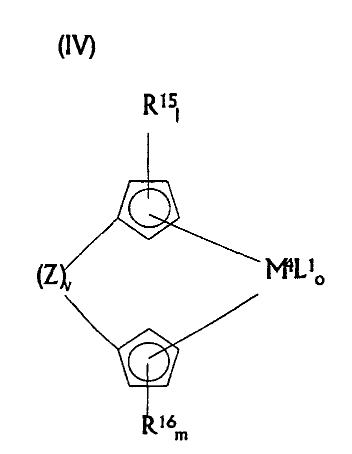 worin
- M⁴: ein Metall der III., IV., V. oder VI. Nebengruppe des Periodensystems der Elemente ist, insbesondere Ti, Zr oder Hf,
- R¹⁵: gleich oder verschieden sind und ein Wasserstoffatom oder Si(R¹⁷)₃ sind, worin R¹⁷ gleich oder verschieden ein Wasserstoffatom oder eine C₁-C₄₀-kohlenstoffhaltige Gruppe, bevorzugt C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl, oder R¹⁵ eine C₁-C₃₀ - kohlenstoffhaltige Gruppe, bevorzugt C₁-C₂₅-Alkyl, wie Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R¹⁵ können so miteinander verbunden sein, daß die Reste R¹⁵ und die sie verbindenden Atome des Cyclopentadienylringes ein C₄-C₂₄-Ringsystem bilden, welches seinerseits substituiert sein kann,
- R¹⁶: gleich oder verschieden sind und ein Wasserstoffatom oder Si(R¹⁸)₃ sind, worin R¹⁸ gleich oder verschieden ein Wasserstoffatom oder eine C₁-C₄₀-kohlenstoffhaltige Gruppe, bevorzugt C₁-C₂₀-Alkyl, C₁-C₁₀-Fluoralkyl, C₁-C₁₀-Alkoxy, C₆-C₁₄-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl, oder R¹⁶ eine C₁-C₃₀ - kohlenstoffhaltige Gruppe, bevorzugt C₁-C₂₅-Alkyl, wie Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl, C₅-C₂₄-Alkylheteroaryl, C₅-C₂₄-Alkylheteroaryl C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R¹⁶ können so miteinander verbunden sein, daß die Reste R¹⁶und die sie verbindenden Atome des Cyclopentadienylringes ein C₄-C₂₄-Ringsystem bilden, welches seinerseits substituiert sein kann,
- l: gleich 5 für v = 0, und 1 gleich 4 für v = 1 ist,
- m: gleich 5 für v = 0, und m gleich 4 für v = 1 ist,
- L¹: gleich oder verschieden sein können und ein Wasserstoffatom, eine C₁-C₁₀-Kohlenwasserstoffgruppe wie C₁-C₁₀-Alkyl oder C₆-C₁₀-Aryl, ein Halogenatom, oder OR¹⁹, SR¹⁹, OSi (R¹⁹)₃, Si(R¹⁹)₃, P(R¹⁹)₂ oder N(R¹⁹)₂ bedeuten, worin R¹⁹ ein Halogenatom, eine C₁-C₁₀ Alkylgruppe, eine halogenierte C₁-C₁₀ Alkylgruppe, eine C₆-C₂₀ Arylgruppe oder eine halogenierte C₆-C₂₀ Arylgruppe sind, oder L¹ sind eine Toluolsulfonyl-, Trifluoracetyl-, Trifluoracetoxyl-, Trifluormethansulfonyl-, Nonafluorbutansulfonyl- oder 2,2,2-Trifluorethansulfonyl-Gruppe,
- o: eine ganze Zahl von 1 bis 4, bevorzugt 2 ist,
- Z: ein verbrückendes Strukturelement zwischen den beiden Cyclopentadienylringen bezeichnet und v ist 0 oder 1.

Beispiele für Z sind Gruppen M⁵R²⁰R²¹, worin M⁵ Kohlenstoff, Silizium, Germanium Bor oder Zinn ist und R²⁰ und R²¹ gleich oder verschieden eine C₁-C₂₀-kohlenwasserstoffhaltige Gruppe wie C₁-C₁₀-Alkyl, C₆-C₁₄-Aryl oder Trimethylsilyl bedeuten. Bevorzugt ist Z gleich CH₂, CH₂CH₂, CH(CH₃)CH₂, CH(C₄H₉)C(CH₃)₂, C(CH₃)₂, (CH₃)₂Si, (CH₃)₂Ge, (CH₃)₂Sn, (C₆H₅)₂Si, (C₆H₅)(CH₃)Si, (C₆H₅) ₂Ge, (CH₃)₃Si-Si (CH₃) (C₆H₅)₂Sn, (CH₂) ₄Si, CH₂Si (CH₃)₂, MeSi-Si (Me)₃

o-C₆H₄ oder 2,2'-(C₆H₄)₂, sowie 1,2-(1-methyl-ethandiyl)-, 1,2-(1,1-dimethyl-ethandiyl)- und 1,2(1,2-dimethyl-ethandiyl)-Brücken. Z kann auch mit einem oder mehreren Resten R¹⁵ und/oder R¹⁶ ein mono- oder polycyclisches Ringsystem bilden.

Bevorzugt sind chirale verbrückte Metallocenverbindungen der Formel (IV), insbesondere solche in denen v gleich 1 ist und einer oder beide Cyclopentadienylringe so substituiert sind, daß sie einen Indenylring darstellen. Der Indenylring ist bevorzugt substituiert, insbesondere in 2-, 4-, 2,4,5-, 2,4,6-, 2,4,7 oder 2,4,5,6-Stellung, mit C₁-C₂₀-kohlenstoffhaltigen Gruppen, wie C₁-C₁₀-Alkyl oder C₆-C₂₀-Aryl, wobei auch zwei oder mehrere Substituenten des Indenylrings zusammen ein Ringsystem bilden können.

Chirale verbrückte Metallocenverbindungen der Formel (IV) können als reine racemische oder reine meso Verbindungen eingesetzt werden. Es können aber auch Gemische aus einer racemischen Verbindung und einer meso Verbindung verwendet werden.

Beispiele für Metallocenverbindungen sind:
Dimethylsilandiylbis (indenyl) zirkoniumdichlorid
Dimethylsilandiylbis (4-naphthyl-indenyl) zirkoniumdichlorid
Dimethylsilandiylbis (2-methyl-benzo-indenyl) zirkoniumdichlorid
Dimethylsilandiylbis (2-methyl-indenyl) zirkoniumdichlorid
Dimethylsilandiylbis (2-methyl-4-(1-naphthyl)-indenyl) zirkoniumdichlorid
Dimethylsilandiylbis(2-methyl-4-(2-naphthyl)-indenyl)zirkoniumdichlorid
Dimethylsilandiylbis (2-methyl-4-phenyl-indenyl) zirkoniumdichlorid
Dimethylsilandiylbis (2-methyl-4-t-butyl-indenyl) zirkoniumdichlorid
Dimethylsilandiylbis (2-methyl-4-isopropyl-indenyl) zirkoniumdichlorid
Dimethylsilandiylbis (2-methyl-4-ethyl-indenyl) zirkoniumdichlorid
Dimethylsilandiylbis (2-methyl-4- -acenaphth-indenyl)zirkoniumdichlorid
Dimethylsilandiylbis(2,4-dimethyl-indenyl)zirkoniumdichlorid
Dimethylsilandiylbis (2-ethyl-indenyl) zirkoniumdichlorid
Dimethylsilandiylbis (2-ethyl-4-ethyl-indenyl) zirkoniumdichlorid
Dimethylsilandiylbis (2-ethyl-4-phenyl-indenyl) zirkoniumdichlorid
Dimethylsilandiybis (2-methyl-4,5-benzo-indenyl) zirkoniumdichlorid
Dimethylsilandiylbis(2-methyl-4,6 diisopropyl-indenyl)zirkoniumdichlorid
Dimethylsilandiylbis(2-methyl-4,5 diisopropyl-indenyl)zirkoniumdichlorid
Dimethylsilandiylbis(2,4,6-trimethyl-indenyl)zirkoniumdichlorid
Dimethylsilandiylbis(2,5,6-trimethyl-indenyl)zirkoniumdichlorid
Dimethylsilandiylbis(2,4,7-trimethyl-indenyl)zirkoniumdichlorid
Dimethylsilandiylbis (2-methyl-5-isobutyl-indenyl) zirkoniumdichlorid
Dimethylsilandiylbis(2-methyl-5-t-butyl-indenyl)zirkoniumdichlorid
Methyl (phenyl) silandiylbis (2-methyl-4-phenyl-indenyl) zirkoniumdichlorid
Methyl(phenyl)silandiylbis(2-methyl-4,6 diisopropyl-indenyl)zirkoniumdichlorid
Methyl (phenyl) silandiylbis (2-methyl-4-isopropyl-indenyl) zirkoniumdichlorid
Methyl (phenyl) silandiylbis (2-methyl-4,5-benzo-indenyl)zirkoniumdichlorid
Methyl (phenyl) silandiylbis (2-methyl-4,5-(methylbenzo)-indenyl)zirkoniumdi-chlorid
Methyl (phenyl) silandiylbis (2-methyl-4,5- (tetramethylbenzo) -indenyl)zirkoniumdichlorid
Methyl (phenyl) silandiylbis (2-methyl-4- -acenaphth-indenyl)zirkoniumdichlorid
Methyl (phenyl) silandiylbis (2-methyl-indenyl) zirkoniumdichlorid
Methyl (phenyl) silandiylbis (2-methyl-5-isobutyl-indenyl) zirkoniumdichlorid
1,2-Ethandiylbis(2-methyl-4-phenyl-indenyl)zirkoniumdichlorid
1,4-Butandiylbis (2-methyl-4-phenyl-indenyl) zirkoniumdichlorid
1,2-Ethandiylbis(2-methyl-4,6 diisopropyl-indenyl)zirkoniumdichlorid
1,4-Butandiylbis (2-methyl-4-isopropyl-indenyl) zirkoniumdichlorid
1,4-Butandiylbis(2-methyl-4,5-benzo-indenyl)zirkoniumdichlorid
1,2-Ethandiylbis (2-methyl-4,5-benzo-indenyl) zirkoniumdichlorid
1,2-Ethandiylbis(2,4,7-trimethyl-indenyl)zirkoniumdichlorid
1,2-Ethandiylbis (2-methyl-indenyl) zirkoniumdichlorid
1,4-Butandiylbis (2-methyl-indenyl) zirkoniumdichlorid
[4-(η⁵-Cyclopentadienyl)-4,6,6-trimethyl-(η⁵-4,5-tetrahydropentalen)]-dichlorozirconium
[4-(η⁵-3'-Trimethylsilyl-cyclopentadienyl)-4,6,6-trimethyl-(η⁵-4,5-tetrahydropentalen)]-dichlorozirconium
[4- (η⁵-3'-Isopropyl-cyclopentadienyl)-4,6,6-trimethyl-(η⁵-4,5-tetrahydropentalen)]-dichlorozirconium
[4-(η⁵-Cyclopentadienyl)-4,7,7-trimethyl-(η⁵-4,5,6,7-tetrahydroindenyl)]-dichlorotitan
[4-(η⁵-Cyclopentadienyl)-4,7,7-trimethyl-(η⁵-4,5,6,7-tetrahydroindenyl)]-dichlorozirkonium
[4-(η⁵-cyclopentadienyl)-4,7,7-trimethyl-(η⁵-4,5,6,7-tetrahydroindenyl)]-dichlorohafnium
[4-(η⁵-3'-tert.Butyl-cyclopentadienyl)-4,7,7-trimethyl-(η⁵-4,5,6,7-tetrahydroindenyl)]-dichlorotitan
4-(η⁵-3'-Isopropylcyclopentadienyl)-4,7,7-trimethyl-(η⁵-4,5,6,7-tetrahydroindenyl)]-dichlorotitan
4-(η⁵-3'-Methylcyclopentadienyl)-4,7,7-trimethyl-(η⁵-4,5,6,7-tetrahydroindenyl)]-dichlorotitan
4-(η⁵-3'-Trimethylsilyl-cyclopentadienyl)-2-trimethylsilyl-4,7,7-trimethyl-(η⁵-4,5,6,7-tetrahydroindenyl)]-dichlorotitan
4- (η⁵-3'-tert.Butyl-cyclopentadienyl)-4,7,7-trimethyl-(η⁵-4,5,6,7-tetrahydroindenyl)]-dichlorozirkonium
(Tertbutylamido)-(tetramethyl-η⁵-cyclopentadienyl)-dimethylsilyldichlorotitan
(Tertbutylamido)-(tetramethyl-η⁵-cyclopentadienyl)-1,2-ethandiyldichlorotitan-dichlorotitan
(Methylamido)-(tetramethyl-η⁵-cyclopentadienyl)-dimethylsilyldichlorotitan
(Methylamido)-(tetramethyl-η⁵-cyclopentadienyl)-1,2-ethandiyldichlorotitan
(Tertbutylamido)-(2,4-dimethyl-2,4-pentadien-1-yl)-dimethylsilyldichlorotitan
Bis-(cyclopentadienyl)-zirkoniumdichlorid
Bis-(n-butylcyclopentadienyl)-zirkoniumdichlorid
Bis-(1,3-dimethylcyclopentadienyl)-zirkoniumdichlorid
Tetrachloro-[1-[bis(η⁵-1H-inden-1-yliden)methylsilyl]-3-η⁵-cyclopenta-2,4-dien-1-yliden) -3-η⁵-9H-fluoren-9-yliden) butan] di-zirkonium
Tetrachloro-[2-[bis (η⁵-2-methyl-1H-inden-1-yliden)methoxysilyl]-5-(η⁵-2,3,4,5-tetramethylcyclopenta-2,4-dien-1-yliden)-5-(η⁵-9H-fluoren-9-yliden)hexan]di-zirkonium
Tetrachloro-[1-[bis(η⁵-1H-inden-1-yliden)methylsilyl]-6-(η⁵-cyclopenta-2,4-dien-1-yliden)-6-(η⁵-9H-fluoren-9-yliden)-3-oxaheptan]di-zirkonium
Dimethylsilandiylbis (2-methyl-4-(tert-butyl-phenyl-indenyl)-zirkoniumdichlorid
Dimethylsilandiylbis (2-methyl-4-(4-methyl-phenyl-indenyl) zirkoniumdichlorid
Dimethylsilandiylbis (2-methyl-4-(4-ethyl-phenyl-indenyl) zirkoniumdichlorid
Dimethylsilandiylbis (2-methyl-4-(4-trifluormethyl-phenyl-indenyl)zirkoniumdichlorid
Dimethylsilandiylbis(2-methyl-4-(4-methoxy-phenyl-indenyl)zirkoniumdichlorid
Dimethylsilandiylbis(2-ethyl-4-(4-tert-butyl-phenyl-indenyl)zirkoniumdichlorid
Dimethylsilandiylbis(2-ethyl-4-(4-methyl-phenyl-indenyl)zirkoniumdichlorid
Dimethylsilandiylbis(2-ethyl-4-(4-ethyl-phenyl-indenyl)zirkoniumdichlorid
Dimethylsilandiylbis (2-ethyl-4-(4-trifluormethyl-phenyl-indenyl)zirkoniumdichlorid
Dimethylsilandiylbis(2-ethyl-4-(4-methoxy-phenyl-indenyl)zirkoniumdichlorid
Dimethylsilandiylbis(2-methyl-4-(4-tert-butyl-phenyl-indenyl)zirkoniumdimethyl
Dimethylsilandiylbis(2-methyl-4-(4-methyl-phenyl-indenyl)zirkoniumdimethyl
Dimethylsilandiylbis(2-methyl-4-(4-ethyl-phenyl-indenyl)zirkoniumdimethyl
Dimethylsilandiylbis(2-methyl-4-(4-trifluormethyl-phenyl-indenyl)zirkoniumdimethyl
Dimethylsilandiylbis(2-methyl-4-(4-methoxy-phenyl-indenyl)zirkoniumdimethyl
Dimethylsilandiylbis (2-ethyl-4-(4-tert-butyl-phenyl-indenyl) zirkoniumdimethyl
Dimethylsilandiylbis(2-ethyl-4-(4-methyl-phenyl-indenyl) zirkoniumdimethyl
Dimethylsilandiylbis(2-ethyl-4-(4-ethyl-phenyl-indenyl)zirkoniumdiethyl
Dimethylsilandiylbis(2-ethyl-4-(4-trifluormethyl-phenyl-indenyl)zirkoniumdimethyl
Dimethylsilandiylbis(2-ethyl-4-(4-methoxy-phenyl-indenyl)zirkoniumdimethyl
Dimethylsilandiylbis(2-methyl-4-(4'-tert.-butyl-phenyl)-indenyl)zirkoniumdichlorid
Dimethylsilandiylbis(2-methyl-4-(4'-tert.-butyl-phenyl)-indenyl) hafnuimdichlorid
Dimethylsilandiylbis(2-methyl-4-(4'-tert.-butyl-phenyl)-indenyl)titandichlorid
Dimethylsilandiylbis(2-methyl-4-(4'-methyl-phenyl)-indenyl) zirkoniumdichlorid
Dimethylsilandiylbis(2-methyl-4- (4'-n-propyl-phenyl)-indenyl) zirkoniumdichlorid
Dimethylsilandiylbis(2-methyl-4-(4'-n-butyl-phenyl)-indenyl)zirkoniumdichlorid
Dimethylsilandiylbis(2-methyl-4-(4'-hexyl-phenyl)-indenyi) zirkoniumdichlorid
Dimethylsilandiylbis(2-methyl-4-(4'-sec-butyl-phenyl)-indenyl)zirkoniumdichlorid
Dimethylsilandiylbis(2-ethyl-4-phenyl)-indenyl) zirkoniumdichlorid
Dimethylsilandiylbis(2-ethyl-4-(4'-methyl-phenyl)-indenyl)zirkoniumdichlorid
Dimethylsilandiylbis(2-ethyl-4-(4'-ethyl-phenyl)-indenyl)zirkoniumdichlorid
Dimethylsilandiylbis(2-ethyl-4-(4'-n-propyl-phenyl)-indenyl)zirkoniumdichlorid
Dimethylsilandiylbis(2-ethyl-4-(4'-n-butyl-phenyl)-indenyl)zirkoniumdichlorid
Dimethylsilandiylbis(2-ethyl-4-(4'-hexyl-phenyl)-indenyl) zirkoniumdichlorid
Dimethylsilandiylbis (2-ethyl-4-(4'-pentyl-phenyl)-indenyl)zirkoniumdichlorid
Dimethylsilandiylbis(2-ethyl-4-(4'-cyclohexyl-phenyl)-indenyl)zirkoniumdichlorid
Dimethylsilandiylbis(2-ethyl-4-(4'-sec-butyl-phenyl)-indenyl)zirkoniumdichlorid
Dimethylsilandiylbis(2-ethyl-4-(4'-tert.-butyl-phenyl)-indenyl)zirkoniumdichlorid
Dimethylsilandiylbis (2-n-propyl-4-phenyl)-indenyl) zirkoniumdichlorid
Dimethylsilandiylbis(2-n-propyl-4-(4'-methyl-phenyl)-indenyl)zirkoniumdichlorid
Dimethylsilandiylbis(2-n-propyl-4-(4'-ethyl-phenyl)-indenyl)zirkoniumdichlorid
Dimethylsilandiylbis(2-n-propyl-4-(4'-iso-propyl-phenyl)-indenyl) zirkoniumdichlorid
Dimethylsilandiylbis(2-n-propyl-4-(4'-n-butyl-phenyl)-indenyl)zirkoniumdichlorid
Dimethylsilandiylbis(2-n-propyl-4-(4'-hexyl-phenyl)-indenyl)zirkoniumdichlorid
Dimethylsilandiylbis(2-n-propyl-4-(4'-cyclohexyl-phenyl)-indenyl)zirkoniumdichlorid
Dimethylsilandiylbis(2-n-propyl-4-(4'-sec-butyl-phenyl)-indenyl) zirkoniumdichlorid
Dimethylsilandiylbis(2-n-propyl-4-(4'-tert.-butyl-phenyl)-indenyl)zirkoniumdichlorid
Dimethylsilandiylbis(2-n-butyl-4-phenyl)-indenyl) zirkoniumdichlorid
Dimethylsilandiylbis(2-n-butyl-4-(4'-methyl-phenyl)-indenyl)zirkoniumdichlorid
Dimethylsilandiylbis(2-n-butyl-4-(4'-ethyl-phenyl)-indenyl)zirkoniumdichlorid
Dimethylsilandiylbis(2-n-butyl-4-(4'-n-propyl-phenyl)-indenyl)zirkoniumdichlorid
Dimethylsilandiylbis(2-n-butyl-4-(4'-iso-propyl-phenyl)-indenyl)zirkoniumdichlorid
Dimethylsilandiylbis(2-n-butyl-4-(4'-n-butyl-phenyl)-indenyl)zirkoniumdichlorid
Dimethylsilandiylbis(2-n-butyl-4-(4'-hexyl-phenyl)-indenyl)zirkoniumdichlorid
Dimethylsilandiylbis(2-n-butyl-4-(4'-cyclohexyl-phenyl)-indenyl)zirkoniumdichlorid
Dimethylsilandiylbis(2-n-butyl-4-(4'-sec-butyl-phenyl)-indenyl)zirkoniumdichlorid
Dimethylsilandiylbis(2-n-butyl-4-(4'-tert.-butyl-phenyl)-indenyl)zirkoniumdichlorid
Dimethylsilandiylbis(2-hexyl-4-phenyl)-indenyl) zirkoniumdichlorid Dimethylsilandiylbis(2-hexyl-4-(4'-methyl-phenyl)-indenyl) zirkoniumdichlorid
Dimethylsilandiylbis(2-hexyl-4-(4'-ethyl-phenyl)-indenyl) zirkoniumdichlorid
Dimethylsilandiylbis(2-hexyl-4-(4'-n-propyl-phenyl)-indenyl)zirkoniumdichlorid
Dimethylsilandiylbis(2-hexyl-4-(4'-iso-propyl-phenyl)-indenyl)zirkoniumdichlorid
Dimethylsilandiylbis(2-hexyl-4-(4'-n-butyl-phenyl)-indenyl)zirkoniumdichlorid
Dimethylsilandiylbis(2-hexyl-4-(4'-hexyl-phenyl)-indenyl)zirkoniumdichlorid
Dimethylsilandiylbis(2-hexyl-4-(4'-cyclohexyl-phenyl)-indenyl)zirkoniumdichlorid
Dimethylsilandiylbis(2-hexyl-4-(4'-sec-butyl-phenyl)-indenyl)zirkoniumdichlorid
Dimethylsilandiylbis(2-hexyl-4-(4'-tert.-butyl-phenyl)-indenyl)zirkoniumdichlorid
Dimethylsilandiylbis(2-methyl-4-(4'-tert.-butyl-phenyl)-indenyl)zirkoniumbis(dimethylamid)
Dimethylsilandiylbis(2-ethyl-4-(4'-tert.-butyl-phenyl)-indenyl) zirkoniumdibenzyl
Dimethylsilandiylbis(2-methyl-4-(4'-tert.-butyl-phenyl)-indenyl) zirkoniumdimethyl
Dimethylgermandiylbis(2-ethyl-4-(4'-tert.-butyl-phenyl)-indenyl)zirkoniumdichlorid
Dimethylgermandiylbis(2-ethyl-4-(4'-tert.-butyl-phenyl)-indenyl) hafniumdichlorid
Dimethylgermandiylbis(2-propyl-4-(4'-tert.-butyl-phenyl)-indenyl) titandichlorid
Dimethylgermandiylbis(2-methyl-4-(4'-tert.-butyl-phenyl)-indenyl)zirkoniumdichlorid
Ethylidenbis (2-ethyl-4-phenyl)-indenyl) zirkoniumdichlorid
Ethylidenbis(2-ethyl-4-(4'-tert.-butyl-phenyl)-indenyl)zirkoniumdichlorid
Ethylidenbis(2-n-propyl-4-(4'-tert.-butyl-phenyl)-indenyl) zirkoniumdichlorid
Ethylidenbis(2-n-butyl-4-(4'-tert.-butyl-phenyl)-indenyl)titandichlorid
Ethylidenbis(2-hexyl-4-(4'-tert.-butyl-phenyl)-indenyl)zirkoniumdibenzyl
Ethylidenbis(2-ethyl-4-(4'-tert.-butyl-phenyl)-indenyl)hafniumdibenzyl
Ethylidenbis(2-methyl-4-(4'-tert.-butyl-phenyl)-indenyl)titandibenzyl
Ethylidenbis(2-methyl-4-(4'-tert.-butyl-phenyl)-indenyl)zirkoniumdichlorid
Ethylidenbis(2-ethyl-4-(4'-tert.-butyl-phenyl)-indenyl)hafniumdimethyl
Ethylidenbis(2-n-propyl-4--phenyl)-indenyl)titandimethyl
Ethylidenbis(2-ethyl-4-(4'-tert.-butyl-phenyl)-indenyl)zirkoniumbis (dimethylamid)
Ethylidenbis(2-ethyl-4-(4'-tert.-butyl-phenyl)-indenyl)hafniumbis (dimethylamid)
Ethylidenbis(2-ethyl-4-(4'-tert.-butyl-phenyl)-indenyl)titanbis (dimethylamid)
Methylethylidenbis(2-ethyl-4-(4'-tert.-butyl-phenyl)-indenyl)zirkoniumdichlorid
Methylethylidenbis(2-ethyl-4-(4'-tert.-butyl-phenyl)-indenyl)hafniumdichlorid
Phenylphosphandiyl(2-ethyl-4-(4'-tert.-butyl-phenyl)-indenyl)zirkoniumdichlorid
Phenylphosphandiyl(2-methyl-4-(4'-tert.-butyl-phenyl)-indenyl) zirkoniumdichlorid
Phenylphosphandiyl(2-ethyl-4-(4'-tert.-butyl-phenyl)-indenyl) zirkoniumdichlorid
Dimethylsilandiyl(2-methyl-4-azapentalen) (2-methyl-4-(4'-methylphenyl-indenyl) zirkoniumdichlorid
Dimethylsilandiyl(2-methyl-5-azapentalen) (2-methyl-4-(4'-methylphenyl-indenyl) zirkoniumdichlorid
Dimethylsilandiyl(2-methyl-6-azapentalen) (2-methyl-4-(4,-methylphenyl-indenyl) zirkoniumdichlorid
Dimethylsilandiyl(2-methyl-N-phenyl-4-azapentalen) (2-methyl-4-(4'-methylphenyl-indenyl) zirkoniumdichlorid
Dimethylsilandiyl(2-methyl-N-phenyl-5-azapentalen) (2-methyl-4-(4'-methylphenyl-indenyl) zirkoniumdichlorid
Dimethylsilandiyl(2-methyl-N-phenyl-6-azapentalen) (2-methyl-4-(4'-methylphenyl-indenyl) zirkoniumdichlorid
Dimethylsilandiyl(2,5-dimethyl-4-azapentalen) (2-methyl-4-(4'-methylphenyl-indenyl) zirkoniumdichlorid
Dimethylsilandiyl(2, 5-dimethyl-6-azapentalen) (2-methyl-4-(4'-methylphenyl-indenyl) zirkoniumdichlorid
Dimethylsilandiyl(2,5-dimethyl-N-phenyl-4-azapentalen) (2-methyl-4-(4'-methylphenyl-indenyl) zirkoniumdichlorid
Dimethylsilandiyl(2,5-dimethyl-N-phenyl-6-azapentalen) (2-methyl-4-(4'-methylphenyl-indenyl) zirkoniumdichlorid
Dimethylsilandiyl(2-methyl-4-thiapentalen) (2-methyl-4-(4'-methylphenyl-indenyl) zirkoniumdichlorid
Dimethylsilandiyl(2-methyl-5-thiapentalen) (2-methyl-4-(4'-methylphenyl-indenyl) zirkoniumdichlorid
Dimethylsilandiyl(2-methyl-6-thiapentalen) (2-methyl-4-(4'-methylphenyl-indenyl)zirkoniumdichlorid
Dimethylsilandiyl(2,5-dimethyl-4-thiapentalen) (2-methyl-4-(4'-methylphenyl-indenyl) zirkoniumdichlorid
Dimethylsilandiyl(2,5-dimethyl-6-thiapentalen) (2-methyl-4-(4'-methylphenyl-indenyl) zirkoniumdichlorid
Dimethylsilandiyl(2-methyl-4-oxapentalen) (2-methyl-4-(4'-methylphenyl-indenyl)zirkoniumdichlorid
Dimethylsilandiyl(2-methyl-5-oxapentalen) (2-methyl-4-(4'-methylphenyl-indenyl)zirkoniumdichlorid
Dimethylsilandiyl(2-methyl-6-oxapentalen) (2-methyl-4-(4'-methylphenyl-indenyl) zirkoniumdichlorid
Dimethylsilandiyl(2,5-dimethyl-4-oxapentalen) (2-methyl-4-(4'-methylphenyl-indenyl) zirkoniumdichlorid
Dimethylsilandiyl(2, 5-dimethyl-6-oxapentalen) (2-methyl-4-(4'-methylphenyl-indenyl) zirkoniumdichlorid
Dimethylsilandiyl(2-methyl-4-azapentalen) (2-methyl-4-(4'-ethylphenyl-indenyl) zirkoniumdichlorid
Dimethylsilandiyl(2-methyl-5-azapentalen) (2-methyl-4-(4'-ethylphenyl-indenyl) zirkoniumdichlorid
Dimethylsilandiyl(2-methyl-6-azapentalen)(2-methyl-4-(4'-ethylphenyl-indenyl) zirkoniumdichlorid
Dimethylsilandiyl(2-methyl-N-phenyl-4-azapentalen)(2-methyl-4-(4'-ethylphenyl-indenyl) zirkoniumdichlorid
Dimethylsilandiyl(2-methyl-N-phenyl-5-azapentalen) (2-methyl-4-(4'-ethylphenyl-indenyl) zirkoniumdichlorid
Dimethylsilandiyl(2-methyl-N-phenyl-6-azapentalen) (2-methyl-4-(4'-ethylphenyl-indenyl) zirkoniumdichlorid
Dimethylsilandiyl(2,5-dimethyl-4-azapentalen) (2-methyl-4-(4'-ethylphenyl-indenyl) zirkoniumdichlorid
Dimethylsilandiyl(2,5-dimethyl-6-azapentalen) (2-methyl-4-(4'-ethylphenyl-indenyl) zirkoniumdichlorid
Dimethylsilandiyl(2,5-dimethyl-N-phenyl-4-azapentalen) (2-methyl-4-(4'-ethylphenyl-indenyl) zirkoniumdichlorid
Dimethylsilandiyl(2,5-dimethyl-N-phenyl-6-azapentalen) (2-methyl-4-(4'-ethylphenyl-indenyl) zirkoniumdichlorid
Dimethylsilandiyl(2-methyl-4-thiapentalen) (2-methyl-4-(4'-ethylphenyl-indenyl) zirkoniumdichlorid
Dimethylsilandiyl(2-methyl-5-thiapentalen) (2-methyl-4-(4'-ethylphenyl-indenyl)zirkoniumdichlorid
Dimethylsilandiyl(2-methyl-6-thiapentalen) (2-methyl-4-(4'-ethylphenyl-indenyl) zirkoniumdichlorid
Dimethylsilandiyl(2,5-dimethyl-4-thiapentalen) (2-methyl-4-(4'-ethylphenyl-indenyl) zirkoniumdichlorid
Dimethylsilandiyl(2,5-dimethyl-6-thiapentalen) (2-methyl-4-(4'-ethylphenyl-indenyl) zirkoniumdichlorid
Dimethylsilandiyl(2-methyl-4-oxapentalen) (2-methyl-4-(4'-ethylphenyl-indenyl)zirkoniumdichlorid
Dimethylsilandiyl(2-methyl-5-oxapentalen) (2-methyl-4-(4'-ethylphenyl-indenyl)zirkoniumdichlorid
Dimethylsilandiyl(2-methyl-6-oxapentalen) (2-methyl-4-(4'-ethylphenyl-indenyl) zirkoniumdichlorid
Dimethylsilandiyl(2,5-dimethyl-4-oxapentalen) (2-methyl-4-(4'-ethylphenyl-indenyl) zirkoniumdichlorid
Dimethylsilandiyl(2,5-dimethyl-6-oxapentalen) (2-methyl-4-(4'-ethylphenyl-indenyl) zirkoniumdichlorid
Dimethylsilandiyl(2-methyl-4-azapentalen) (2-methyl-4-(4'-n-propylphenyl-indenyl) zirkoniumdichlorid
Dimethylsilandiyl(2-methyl-5-azapentalen) (2-methyl-4-(4'-n-propylphenyl-indenyl) zirkoniumdichlorid
Dimethylsilandiyl(2-methyl-6-azapentalen) (2-methyl-4-(4'-n-propylphenyl-indenyl) zirkoniumdichlorid
Dimethylsilandiyl(2-methyl-N-phenyl-4-azapentalen) (2-methyl-4-(4'-n-propylphenyl-indenyl) zirkoniumdichlorid
Dimethylsilandiyl(2-methyl-N-phenyl-5-azapentalen) (2-methyl-4-(4'-n-propylphenyl-indenyl) zirkoniumdichlorid
Dimethylsilandiyl(2-methyl-N-phenyl-6-azapentalen) (2-methyl-4-(4'-n-propylphenyl-indenyl) zirkoniumdichlorid
Dimethylsilandiyl(2, 5-dimethyl-4-azapentalen) (2-methyl-4-(4'-n-propylphenyl-indenyl) zirkoniumdichlorid
Dimethylsilandiyl(2, 5-dimethyl-6-azapentalen) (2-methyl-4-(4'-n-propylphenyl-indenyl) zirkoniumdichlorid
Dimethylsilandiyl(2,5-dimethyl-N-phenyl-4-azapentalen) (2-methyl-4-(4'-n-propylphenyl-indenyl) zirkoniumdichlorid
Dimethylsilandiyl(2,5-dimethyl-N-phenyl-6-azapentalen) (2-methyl-4-(4'-n-propylphenyl-indenyl) zirkoniumdichlorid
Dimethylsilandiyl(2-methyl-4-thiapentalen) (2-methyl-4-(4'-n-propylphenyl-indenyl)zirkoniumdichlorid
Dimethylsilandiyl(2-methyl-5-thiapentalen) (2-methyl-4-(4'-n-propylphenyl-indenyl)zirkoniumdichlorid
Dimethylsilandiyl(2-methyl-6-thiapentalen) (2-methyl-4-(4'-n-propylphenyl-indenyl)zirkoniumdichlorid
Dimethylsilandiyl(2,5-dimethyl-4-thiapentalen)(2-methyl-4-(4'-n-propylphenyl-indenyl) zirkoniumdichlorid
Dimethylsilandiyl(2,5-dimethyl-6-thiapentalen)(2-methyl-4-(4'-n-propylphenyl-indenyl) zirkoniumdichlorid
Dimethylsilandiyl(2-methyl-4-oxapentalen) (2-methyl-4-(4'-n-propylphenyl-indenyl)zirkoniumdichlorid
Dimethylsilandiyl(2-methyl-5-oxapentalen) (2-methyl-4-(4'-n-propylphenyl-indenyl)zirkoniumdichlorid
Dimethylsilandiyl(2-methyl-6-oxapentalen) (2-methyl-4-(4'-n-propylphenyl-indenyl)zirkoniumdichlorid
Dimethylsilandiyl(2,5-dimethyl-4-oxapentalen)(2-methyl-4-(4'-n-propylphenyl-indenyl) zirkoniumdichlorid
Dimethylsilandiyl(2,5-dimethyl-6-oxapentalen)(2-methyl-4-(4'-n-propylphenyl-indenyl) zirkoniumdichlorid
Dimethylsilandiyl(2-methyl-4-azapentalen) (2-methyl-4-(4'-isopropylphenyl-indenyl) zirkoniumdichlorid
Dimethylsilandiyl(2-methyl-5-azapentalen) (2-methyl-4-(4'-isopropylphenyl-indenyl) zirkoniumdichlorid
Dimethylsilandiyl(2-methyl-6-azapentalen) (2-methyl-4-(4'-isopropylphenyl-indenyl) zirkoniumdichlorid
Dimethylsilandiyl(2-methyl-N-phenyl-4-azapentalen) (2-methyl-4-(4'-isopropylphenyl-indenyl)zirkoniumdichlorid
Dimethylsilandiyl(2-methyl-N-phenyl-5-azapentalen) (2-methyl-4-(4'-isopropylphenyl-indenyl) zirkoniumdichlorid
Dimethylsilandiyl(2-methyl-N-Phenyl-6-azapentalen) (2-methyl-4-(4'-isopropylphenyl-indenyl) zirkoniumdichlorid
Dimethylsilandiyl(2,5-dimethyl-4-azapentalen) (2-methyl-4-(4'-isopropylphenyl-indenyl) zirkoniumdichlorid
Dimethylsilandiyl(2,5-dimethyl-6-azapentalen) (2-methyl-4-(4'-isopropylphenyl-indenyl) zirkoniumdichlorid
Dimethylsilandiyl(2,5-dimethyl-N-phenyl-4-azapentalen) (2-methyl-4-(4'-isopropylphenyl-indenyl) zirkoniumdichlorid
Dimethylsilandiyl(2,5-dimethyl-N-phenyl-6-azapentalen) (2-methyl-4-(4'-isopropylphenyl-indenyl) zirkoniumdichlorid
Dimethylsilandiyl(2-methyl-4-thiapentalen) (2-methyl-4-(4'-isopropylphenyl-indenyl)zirkoniumdichlorid
Dimethylsilandiyl(2-methyl-5-thiapentalen) (2-methyl-4-(4'-isopropylphenyl-indenyl)zirkoniumdichlorid
Dimethylsilandiyl(2-methyl-6-thiapentalen) (2-methyl-4-(4'-isopropylphenyl-indenyl)zirkoniumdichlorid
Dimethylsilandiyl(2,5-dimethyl-4-thiapentalen)(2-methyl-4-(4'-isopropylphenyl-indenyl) zirkoniumdichlorid
Dimethylsilandiyl(2,5-dimethyl-6-thiapentalen) (2-methyl-4-(4'-isopropylphenyl-indenyl) zirkoniumdichlorid
Dimethylsilandiyl(2-methyl-4-oxapentalen) (2-methyl-4-(4'-isopropylphenyl-indenyl) zirkoniumdichlorid
Dimethylsilandiyl(2-methyl-5-oxapentalen) (2-methyl-4-(4'-isopropylphenyl-indenyl)zirkoniumdichlorid
Dimethylsilandiyl(2-methyl-6-oxapentalen) (2-methyl-4-(4'-isopropylphenyl-indenyl)zirkoniumdichlorid
Dimethylsilandiyl(2,5-dimethyl-4-oxapentalen) (2-methyl-4-(4'-isopropylphenyl-indenyl) zirkoniumdichlorid
Dimethylsilandiyl(2,5-dimethyl-6-oxapentalen) (2-methyl-4-(4'-isopropylphenyl-indenyl) zirkoniumdichlorid
Dimethylsilandiyl(2-methyl-4-azapentalen) (2-methyl-4-(4'-n-butylphenyl-indenyl) zirkoniumdichlorid
Dimethylsilandiyl(2-methyl-5-azapentalen) (2-methyl-4-(4'-n-butylphenyl-indenyl) zirkoniumdichlorid
Dimethylsilandiyl(2-methyl-6-azapentalen) (2-methyl-4-(4'-n-butylphenyl-indenyl) zirkoniumdichlorid
Dimethylsilandiyl(2-methyl-N-phenyl-4-azapentalen) (2-methyl-4-(4'-n-butylphenyl-indenyl) zirkoniumdichlorid
Dimethylsilandiyl(2-methyl-N-phenyl-5-azapentalen) (2-methyl-4-(4'-n-butylphenyl-indenyl) zirkoniumdichlorid
Dimethylsilandiyl(2-methyl-N-phenyl-6-azapentalen) (2-methyl-4-(4'-n-butylphenyl-indenyl) zirkoniumdichlorid
Dimethylsilandiyl(2,5-dimethyl-4-azapentalen) (2-methyl-4-(4'-n-butylphenyl-indenyl) zirkoniumdichlorid
Dimethylsilandiyl(2,5-dimethyl-6-azapentalen) (2-methyl-4-(4'-n-butylphenyl-indenyl) zirkoniumdichlorid
Dimethylsilandiyl (2,5-dimethyl-N-phenyl-4-azapentalen) (2-methyl-4-(4'-n-butylphenyl-indenyl) zirkoniumdichlorid
Dimethylsilandiyl(2,5-dimethyl-N-phenyl-6-azapentalen) (2-methyl-4-(4'-n-butylphenyl-indenyl) zirkoniumdichlorid
Dimethylsilandiyl(2-methyl-4-thiapentalen) (2-methyl-4-(4'-n-butylphenyl-indenyl)zirkoniumdichlorid
Dimethylsilandiyl(2-methyl-5-thiapentalen) (2-methyl-4-(4'-n-butylphenyl-indenyl) zirkoniumdichlorid
Dimethylsilandiyl(2-methyl-6-thiapentalen) (2-methyl-4-(4'-n-butylphenyl-indenyl)zirkoniumdichlorid
Dimethylsilandiyl(2,5-dimethyl-4-thiapentalen) (2-methyl-4-(4'-n-butylphenyl-indenyl) zirkoniumdichlorid
Dimethylsilandiyl(2,5-dimethyl-6-thiapentalen) (2-methyl-4-(4'-n-butylphenyl-indenyl) zirkoniumdichlorid
Dimethylsilandiyl(2-methyl-4-oxapentalen) (2-methyl-4-(4'-n-butylphenyl-indenyl)zirkoniumdichlorid
Dimethylsilandiyl(2-methyl-5-oxapentalen) (2-methyl-4-(4'-n-butylphenyl-indenyl) zirkoniumdichlorid
Dimethylsilandiyl(2-methyl-6-oxapentalen) (2-methyl-4-(4'-n-butylphenyl-indenyl)zirkoniumdichlorid
Dimethylsilandiyl(2,5-dimethyl-4-oxapentalen) (2-methyl-4-(4'-n-butylphenyl-indenyl) zirkoniumdichlorid
Dimethylsilandiyl(2,5-dimethyl-6-oxapentalen) (2-methyl-4-(4'-n-butylphenyl-indenyl) zirkoniumdichlorid
Dimethylsilandiyl(2-methyl-4-azapentalen) (2-methyl-4-(4'-s-butylphenyl-indenyl)zirkoniumdichlorid
Dimethylsilandiyl(2-methyl-5-azapentalen) (2-methyl-4-(4'-s-butylphenyl-indenyl) zirkoniumdichlorid
Dimethylsilandiyl(2-methyl-6-azapentalen) (2-methyl-4-(4'-s-butylphenyl-indenyl) zirkoniumdichlorid
Dimethylsilandiyl(2-methyl-N-phenyl-4-azapentalen) (2-methyl-4-(4'-s-butylphenyl-indenyl) zirkoniumdichlorid
Dimethylsilandiyl(2-methyl-N-phenyl-5-azapentalen) (2-methyl-4-(4'-s-butylphenyl-indenyl) zirkoniumdichlorid
Dimethylsilandiyl(2-methyl-N-phenyl-6-azapentalen) (2-methyl-4-(4'-s-butylphenyl-indenyl) zirkoniumdichlorid
Dimethylsilandiyl(2,5-dimethyl-4-azapentalen) (2-methyl-4-(4'-s-butylphenyl-indenyl) zirkoniumdichlorid
Dimethylsilandiyl(2,5-dimethyl-6-azapentalen) (2-methyl-4-(4'-s-butylphenyl-indenyl) zirkoniumdichlorid
Dimethylsilandiyl(2,5-dimethyl-N-phenyl-4-azapentalen) (2-methyl-4-(4'-s-butylphenyl-indenyl) zirkoniumdichlorid
Dimethylsilandiyl(2,5-dimethyl-N-phenyl-6-azapentalen) (2-methyl-4- (4'-s-butylphenyl-indenyl) zirkoniumdichlorid
Dimethylsilandiyl(2-methyl-4-thiapentalen)(2-methyl-4-(4'-s-butylphenyl-indenyl)zirkoniumdichlorid
Dimethylsilandiyl(2-methyl-5-thiapentalen)(2-methyl-4-(4'-s-butylphenyl-indenyl)zirkoniumdichlorid
Dimethylsilandiyl(2-methyl-6-thiapentalen)(2-methyl-4-(4'-s-butylphenyl-indenyl)zirkoniumdichlorid
Dimethylsilandiyl(2,5-dimethyl-4-thiapentalen) (2-methyl-4-(4'-s-butylphenyl-indenyl) zirkoniumdichlorid
Dimethylsilandiyl(2,5-dimethyl-6-thiapentalen) (2-methyl-4-(4'-s-butylphenyl-indenyl) zirkoniumdichlorid
Dimethylsilandiyl(2-methyl-4-oxapentalen) (2-methyl-4-(4'-s-butylphenyl-indenyl)zirkoniumdichlorid
Dimethylsilandiyl(2-methyl-5-oxapentalen)(2-methyl-4-(4'-s-butylphenyl-indenyl)zirkoniumdichlorid
Dimethylsilandiyl(2-methyl-6-oxapentalen) (2-methyl-4-(4'-s-butylphenyl-indenyl)zirkoniumdichlorid
Dimethylsilandiyl(2,5-dimethyl-4-oxapentalen) (2-methyl-4-(4'-s-butylphenyl-indenyl)zirkoniumdichlorid
Dimethylsilandiyl(2,5-dimethyl-6-oxapentalen)(2-methyl-4-(4'-s-butylphenyl-indenyl)zirkoniumdichlorid
Dimethylsilandiyl(2-methyl-4-azapentalen)(2-methyl-4-(4'-tert-butylphenyl-indenyl)zirkoniumdichlorid
Dimethylsilandiyl(2-methyl-5-azapentalen)(2-methyl-4-(4'-tert-butylphenyl-indenyl)zirkoniumdichlorid
Dimethylsilandiyl(2-methyl-5-azapentalen)(2-methyl-4-(4'-tert-butylphenyl-indenyl)zirkoniumdichlorid
Dimethylsilandiyl(2-methyl-N-phenyl-4-azapentalen)(2-methyl-4-(4'-tert-butylphenyl-indenyl)zirkoniumdichlorid
Dimethylsilandiyl(2-methyl-N-phenyl-5-azapentalen)(2-methyl-4-(4'-tert-butylphenyl-indenyl) zirkoniumdichlorid
Dimethylsilandiyl(2-methyl-N-phenyl-6-azapentalen) (2-methyl-4-(4'-tert-butylphenyl-indenyl) zirkoniumdichlorid
Dimethylsilandiyl(2,5-dimethyl-4-azapentalen)(2-methyl-4-(4'-tert-butylphenyl-indenyl) zirkoniumdichlorid
Dimethylsilandiyl(2,5-dimethyl-6-azapentalen)(2-methyl-4-(4'-tert-butylphenyl-indenyl) zirkoniumdichlorid
Dimethylsilandiyl(2,5-dimethyl-N-phenyl-4-azapentalen)(2-methyl-4-(4'-tert-butylphenyl-indenyl) zirkoniumdichlorid
Dimethylsilandiyl(2,5-dimethyl-N-phenyl-6-azapentalen) (2-methyl-4-(4'-tert-butylphenyl-indenyl) zirkoniumdichlorid
Dimethylsilandiyl(2-methyl-4-thiapentalen)(2-methyl-4-(4'-tertbutylphenyl-indenyl)zirkoniumdichlorid
Dimethylsilandiyl(2-methyl-5-thiapentalen)(2-methyl-4-(4'-tertbutylphenyl-indenyl)zirkoniumdichlorid
Dimethylsilandiyl(2-methyl-6-thiapentalen)(2-methyl-4-(4'-tertbutylphenyl-indenyl) zirkoniumdichlorid
Dimethylsilandiyl(2,5-dimethyl-4-thiapentalen)(2-methyl-4-(4'-tert-butylphenyl-indenyl) zirkoniumdichlorid
Dimethylsilandiyl(2,5-dimethyl-6-thiapentalen) (2-methyl-4-(4'-tert-butylphenyl-indenyl) zirkoniumdichlorid
Dimethylsilandiyl(2-methyl-4-oxapentalen) (2-methyl-4-(4'-tert-butylphenyl-indenyl) zirkoniumdichlorid
Dimethylsilandiyl(2-methyl-5-oxapentalen)(2-methyl-4-(4'-tert-butylphenyl-indenyl)zirkoniumdichlorid
Dimethylsilandiyl(2-methyl-6-oxapentalen) (2-methyl-4-(4'-tert-butylphenyl-indenyl)zirkoniumdichlorid
Dimethylsilandiyl(2,5-dimethyl-4-oxapentalen) (2-methyl-4-(4'-tert-butylphenyl-indenyl)zirkoniumdichlorid
Dimethylsilandiyl(2,5-dimethyl-6-oxapentalen) (2-methyl-4-(4'-tert-butylphenyl-indenyl) zirkoniumdichlorid
Dimethylsilandiyl(2-methyl-4-azapentalen) (2-methyl-4-(4'-n-pentylphenyl-indenyl) zirkoniumdichlorid
Dimethylsilandiyl(2-methyl-5-azapentalen) (2-methyl-4-(4'-n-pentylphenyl-indenyl) zirkoniumdichlorid
Dimethylsilandiyl(2-methyl-6-azapentalen) (2-methyl-4-4'-n-pentylphenyl-indenyl) zirkoniumdichlorid
Dimethylsilandiyl (2-methyl-N-phenyl-4-azapentalen) (2-methyl-4-(4'-n-pentylphenyl-indenyl) zirkoniumdichlorid
Dimethylsilandiyl (2-methyl-N-phenyl-5-azapentalen) (2-methyl-4-(4'-n-pentylphenyl-indenyl) zirkoniumdichlorid
Dimethylsilandiyl(2-methyl-N-phenyl-6-azapentalen) (2-methyl-4-(4'-n-pentylphenyl-indenyl) zirkoniumdichlorid
Dimethylsilandiyl (2,5-dimethyl-4-azapentalen) (2-methyl-4-(4'-n-pentylphenyl-indenyl) zirkoniumdichlorid
Dimethylsilandiyl(2,5-dimethyl-6-azapentalen) (2-methyl-4-(4'-n-pentylphenyl-indenyl) zirkoniumdichlorid
Dimethylsilandiyl(2,5-dimethyl-N-phenyl-4-azapentalen) (2-methyl-4-(4'-n-pentylphenyl-indenyl) zirkoniumdichlorid
Dimethylsilandiyl (2,5-dimethyl-N-phenyl-6-azapentalen) (2-methyl-4-(4'-n-pentylphenyl-indenyl) zirkoniumdichlorid
Dimethylsilandiyl (2-methyl-4-thiapentalen) (2-methyl-4-(4'-n-pentylphenyl-indenyl)zirkoniumdichlorid
Dimethylsilandiyl (2-methyl-5-thiapentalen) (2-methyl-4-(4'-n-pentylphenyl-indenyl)zirkoniumdichlorid
Dimethylsilandiyl(2-methyl-6-thiapentalen) (2-methyl-4-(4'-n-pentylphenyl-indenyl) zirkoniumdichlorid
Dimethylsilandiyl(2,5-dimethyl-4-thiapentalen) (2-methyl-4-(4'-n-pentylphenyl-indenyl) zirkoniumdichlorid
Dimethylsilandiyl (2,5-dimethyl-6-thiapentalen) (2-methyl-4-(4'-n-pentylphenyl-indenyl) zirkoniumdichlorid
Dimethylsilandiyl(2-methyl-4-oxapentalen) (2-methyl-4-(4'-n-pentylphenyl-indenyl) zirkoniumdichlorid
Dimethylsilandiyl(2-methyl-5-oxapentalen) (2-methyl-4-(4'-n-pentylphenyl-indenyl)zirkoniumdichlorid
Dimethylsilandiyl (2-methyl-6-oxapentalen) (2-methyl-4-(4'-n-pentylphenyl-indenyl)zirkoniumdichlorid
Dimethylsilandiyl(2,5-dimethyl-4-oxapentalen) (2-methyl-4-(4'-n-pentylphenyl-indenyl) zirkoniumdichlorid
Dimethylsilandiyl(2,5-dimethyl-6-oxapentalen) (2-methyl-4-(4'-n-pentylphenyl-indenyl) zirkoniumdichlorid
Dimethylsilandiyl (2-methyl-4-azapentalen) (2-methyl-4-(4'-n-hexylphenyl-indenyl) zirkoniumdichlorid
Dimethylsilandiyl (2-methyl-5-azapentalen) (2-methyl-4-(4'-n-hexylphenyl-indenyl) zirkoniumdichlorid
Dimethylsilandiyl (2-methyl-6-azapentalen) (2-methyl-4-(4'-n-hexylphenyl-indenyl) zirkoniumdichlorid
Dimethylsilandiyl(2-methyl-N-phenyl-4-azapentalen) (2-methyl-4-(4'-n-hexylphenyl-indenyl) zirkoniumdichlorid
Dimethylsilandiyl(2-methyl-N-phenyl-5-azapentalen) (2-methyl-4-(4'-n-hexylphenyl-indenyl) zirkoniumdichlorid
Dimethylsilandiyl(2-methyl-N-phenyl-6-azapentalen) (2-methyl-4-(4'-n-hexylphenyl-indenyl) zirkoniumdichlorid
Dimethylsilandiyl (2, 5-dimethyl-4-azapentalen) (2-methyl-4-(4'-n-hexylphenyl-indenyl) zirkoniumdichlorid
Dimethylsilandiyl(2,5-dimethyl-6-azapentalen) (2-methyl-4-(4'-n-hexylphenyl-indenyl) zirkoniumdichlorid
Dimethylsilandiyl(2,5-dimethyl-N-phenyl-4-azapentalen) (2-methyl-4-(4'-n-hexylphenyl-indenyl) zirkoniumdichlorid
Dimethylsilandiyl (2,5-dimethyl-N-phenyl-6-azapentalen) (2-methyl-4-(4'-n-hexylphenyl-indenyl) zirkoniumdichlorid
Dimethylsilandiyl(2-methyl-4-thiapentalen) (2-methyl-4-(4'-n-hexylphenyl-indenyl) zirkoniumdichlorid
Dimethylsilandiyl(2-methyl-5-thiapentalen) (2-methyl-4-(4'-n-hexylphenyl-indenyl)zirkoniumdichlorid
Dimethylsilandiyl(2-methyl-6-thiapentalen) (2-methyl-4-(4'-n-hexylphenyl-indenyl)zirkoniumdichlorid
Dimethylsilandiyl(2,5-dimethyl-4-thiapentalen)(2-methyl-4-(4'-n-hexylphenyl-indenyl) zirkoniumdichlorid
Dimethylsilandiyl(2,5-dimethyl-6-thiapentalen)(2-methyl-4-(4'-n-hexylphenyl-indenyl) zirkoniumdichlorid
Dimethylsilandiyl(2-methyl-4-oxapentalen) (2-methyl-4-(4'-n-hexylphenyl-indenyl) zirkoniumdichlorid
Dimethylsilandiyl(2-methyl-5-oxapentalen) (2-methyl-4-(4'-n-hexylphenyl-indenyl)zirkoniumdichlorid
Dimethylsilandiyl(2-methyl-6-oxapentalen) (2-methyl-4-(4'-n-hexylphenyl-indenyl)zirkoniumdichlorid
Dimethylsilandiyl(2, 5-dimethyl-4-oxapentalen) (2-methyl-4-(4'-n-hexylphenyl-indenyl) zirkoniumdichlorid
Dimethylsilandiyl(2,5-dimethyl-6-oxapentalen) (2-methyl-4-(4'-n-hexylphenyl-indenyl) zirkoniumdichlorid
Dimethylsilandiyl(2-methyl-4-azapentalen) (2-methyl-4-(4'-cyclohexylphenyl-indenyl) zirkoniumdichlorid
Dimethylsilandiyl(2-methyl-5-azapentalen) (2-methyl-4-(4'-cyclohexylphenyl-indenyl) zirkoniumdichlorid
Dimethylsilandiyl(2-methyl-6-azapentalen) (2-methyl-4-(4'-cyclohexylphenyl-indenyl) zirkoniumdichlorid
Dimethylsilandiyl(2-methyl-N-phenyl-4-azapentalen) (2-methyl-4-(4'-cyclohexylphenyl-indenyl) zirkoniumdichlorid
Dimethylsilandiyl(2-methyl-N-phenyl-5-azapentalen)(2-methyl-4-(4'-cyclohexylphenyl-indenyl) zirkoniumdichlorid
Dimethylsilandiyl(2-methyl-N-phenyl-6-azapentalen) (2-methyl-4-(4'-cyclohexylphenyl-indenyl) zirkoniumdichlorid
Dimethylsilandiyl(2,5-dimethyl-4-azapentalen) (2-methyl-4-(4'-cyclohexylphenyl-indenyl) zirkoniumdichlorid
Dimethylsilandiyl(2,5-dimethyl-6-azapentalen) (2-methyl-4-(4'-cyclohexylphenyl-indenyl) zirkoniumdichlorid
Dimethylsilandiyl(2,5-dimethyl-N-phenyl-4-azapentalen) (2-methyl-4-(4'-cyclohexylphenyl-indenyl) zirkoniumdichlorid
Dimethylsilandiyl(2,5-dimethyl-N-phenyl-6-azapentalen) (2-methyl-4-(4'-cyclohexylphenyl-indenyl) zirkoniumdichlorid
Dimethylsilandiyl(2-methyl-4-thiapentalen) (2-methyl-4-(4'-cyclohexylphenyl-indenyl)zirkoniumdichlorid
Dimethylsilandiyl(2-methyl-5-thiapentalen) (2-methyl-4- (4' -cyclohexylphenyl-indenyl) zirkoniumdichlorid
Dimethylsilandiyl(2-methyl-6-thiapentalen) (2-methyl-4-(4'-cyclohexylphenyl-indenyl)zirkoniumdichlorid
Dimethylsilandiyl(2,5-dimethyl-4-thiapentalen) (2-methyl-4-(4'-cyclohexylphenyl-indenyl) zirkoniumdichlorid
Dimethylsilandiyl(2,5-dimethyl-6-thiapentalen) (2-methyl-4-(4'-cyclohexylphenyl-indenyl) zirkoniumdichlorid
Dimethylsilandiyl(2-methyl-4-oxapentalen) (2-methyl-4-(4'-cyclohexylphenyl-indenyl) zirkoniumdichlorid
Dimethylsilandiyl(2-methyl-5-oxapentalen) (2-methyl-4-(4'-cyclohexylphenyl-indenyl)zirkoniumdichlorid
Dimethylsilandiyl(2-methyl-6-oxapentalen) (2-methyl-4- (4' -cyclohexylphenyl-indenyl) zirkoniumdichlorid
Dimethylsilandiyl(2,5-dimethyl-4-oxapentalen) (2-methyl-4-(4'-cyclohexylphenyl-indenyl) zirkoniumdichlorid
Dimethylsilandiyl(2,5-dimethyl-6-oxapentalen) (2-methyl-4-(4'-cyclohexylphenyl-indenyl) zirkoniumdichlorid
Dimethylsilandiyl(2-methyl-4-azapentalen) (2-methyl-4-(4'-trimethylsilylphenyl-indenyl) zirkoniumdichlorid
Dimethylsilandiyl(2-methyl-5-azapentalen) (2-methyl-4-(4'-trimethylsilylphenyl-indenyl) zirkoniumdichlorid
Dimethylsilandiyl(2-methyl-6-azapentalen) (2-methyl-4-(4'-trimethylsilylphenyl-indenyl) zirkoniumdichlorid
Dimethylsilandiyl(2-methyl-N-phenyl-4-azapentalen) (2-methyl-4-(4'-trimethylsilylphenyl-indenyl) zirkoniumdichlorid
Dimethylsilandiyl(2-methyl-N-phenyl-5-azapentalen) (2-methyl-4-(4'-trimethylsilylphenyl-indenyl) zirkoniumdichlorid
Dimethylsilandiyl(2-methyl-N-phenyl-6-azapentalen) (2-methyl-4-(4'-trimethylsilylphenyl-indenyl) zirkoniumdichlorid
Dimethylsilandiyl(2,5-dimethyl-4-azapentalen) (2-methyl-4-(4'-trimethylsilylphenyl-indenyl) zirkoniumdichlorid
Dimethylsilandiyl(2,5-dimethyl-6-azapentalen) (2-methyl-4-(4'-trimethylsilylphenyl-indenyl) zirkoniumdichlorid
Dimethylsilandiyl(2,5-dimethyl-N-phenyl-4-azapentalen) (2-methyl-4-(4'-trimethylsilylphenyl-indenyl) zirkoniumdichlorid
Dimethylsilandiyl(2,5-dimethyl-N-phenyl-6-azapentalen) (2-methyl-4-(4'-trimethylsilylphenyl-indenyl) zirkoniumdichlorid
Dimethylsilandiyl(2-methyl-4-thiapentalen) (2-methyl-4-(4'-trimethylsilylphenyl-indenyl) zirkoniumdichlorid
Dimethylsilandiyl(2-methyl-5-thiapentalen) (2-methyl-4-(4'-trimethylsilylphenyl-indenyl) zirkoniumdichlorid
Dimethylsilandiyl(2-methyl-6-thiapentalen) (2-methyl-4-(4'-trimethylsilylphenyl-indenyl) zirkoniumdichlorid
Dimethylsilandiyl(2,5-dimethyl-4-thiapentalen) (2-methyl-4-(4'-trimethylsilylphenyl-indenyl) zirkoniumdichlorid
Dimethylsilandiyl(2,5-dimethyl-6-thiapentalen) (2-methyl-4-(4'-trimethylsilylphenyl-indenyl) zirkoniumdichlorid
Dimethylsilandiyl(2-methyl-4-oxapentalen)(2-methyl-4-(4'-trimethylsilylphenyl-indenyl) zirkoniumdichlorid
Dimethylsilandiyl(2-methyl-5-oxapentalen) (2-methyl-4-(4'-trimethylsilylphenyl-indenyl)zirkoniumdichlorid
Dimethylsilandiyl(2-methyl-6-oxapentalen) (2-methyl-4-(4'-trimethylsilylphenyl-indenyl)zirkoniumdichlorid
Dimethylsilandiyl(2,5-dimethyl-4-oxapentalen) (2-methyl-4-(4'-trimethylsilylphenyl-indenyl) zirkoniumdichlorid
Dimethylsilandiyl(2,5-dimethyl-6-oxapentalen) (2-methyl-4-(4'-trimethylsilylphenyl-indenyl) zirkoniumdichlorid
Dimethylsilandiyl(2-methyl-4-azapentalen) (2-methyl-4-(4'-adamantylphenyl-indenyl) zirkoniumdichlorid
Dimethylsilandiyl(2-methyl-5-azapentalen) (2-methyl-4-(4'-adamantylphenyl-indenyl) zirkoniumdichlorid
Dimethylsilandiyl(2-methyl-6-azapentalen) (2-methyl-4-(4'-adamantylphenyl-indenyl) zirkoniumdichlorid
Dimethylsilandiyl(2-methyl-N-phenyl-4-azapentalen) (2-methyl-4-(4'-adamantylphenyl-indenyl) zirkoniumdichlorid
Dimethylsilandiyl(2-methyl-N-phenyl-5-azapentalen) (2-methyl-4-(4'-adamantylphenyl-indenyl) zirkoniumdichlorid
Dimethylsilandiyl(2-methyl-N-phenyl-6-azapentalen) (2-methyl-4-(4'-adamantylphenyl-indenyl) zirkoniumdichlorid
Dimethylsilandiyl(2,5-dimethyl-4-azapentalen) (2-methyl-4-(4'-adamantylphenyl-indenyl) zirkoniumdichlorid
Dimethylsilandiyl(2,5-dimethyl-6-azapentalen) (2-methyl-4-(4'-adamantylphenyl-indenyl) zirkoniumdichlorid
Dimethylsilandiyl(2,5-dimethyl-4-azapentalen) (2-methyl-4-(4'-adamantylphenyl-indenyl) zirkoniumdichlorid
Dimethylsilandiyl(2,5-dimethyl-N-phenyl-4-azapentalen) (2-methyl-4-(4'-adamantylphenyl-indenyl) zirkoniumdichlorid
Dimethylsilandiyl(2,5-dimethyl-N-phenyl-6-azapentalen) (2-methyl-4-(4'-adamantylphenyl-indenyl) zirkoniumdichlorid
Dimethylsilandiyl(2-methyl-4-thiapentalen) (2-methyl-4-(4'-adamantylphenyl-indenyl)zirkoniumdichlorid
Dimethylsilandiyl(2-methyl-5-thiapentalen) (2-methyl-4-(4'-adamantylphenyl-indenyl)zirkoniumdichlorid
Dimethylsilandiyl(2-methyl-6-thiapentalen) (2-methyl-4-(4'-adamantylphenyl-indenyl)zirkoniumdichlorid
Dimethylsilandiyl(2,5-dimethyl-4-thiapentalen) (2-methyl-4-(4'-adamantylphenyl-indenyl) zirkoniumdichlorid
Dimethylsilandiyl(2,5-dimethyl-6-thiapentalen)(2-methyl-4-(4'-adamantylphenyl-indenyl) zirkoniumdichlorid
Dimethylsilandiyl(2-methyl-4-oxapentalen) (2-methyl-4-(4'-adamantylphenyl-indenyl) zirkoniumdichlorid
Dimethylsilandiyl(2-methyl-5-oxapentalen) (2-methyl-4-(4'-adamantylphenyl-indenyl) zirkoniumdichlorid
Dimethylsilandiyl (2-methyl-6-oxapentalen) (2-methyl-4- 4'-adamantylphenyl-indenyl)zirkoniumdichlorid
Dimethylsilandiyl(2,5-dimethyl-4-oxapentalen) (2-methyl-4-(4'-adamantylphenyl-indenyl) zirkoniumdichlorid
Dimethylsilandiyl(2,5-dimethyl-6-oxapentalen) (2-methyl-4-(4'-adamantylphenyl-indenyl) zirkoniumdichlorid
Dimethylsilandiyl(2-methyl-4-azapentalen)(2-methyl-4-(4'-tris(trifluormethyl)methylphenyl-indenyl) zirkoniumdichlorid
Dimethylsilandiyl(2-methyl-5-azapentalen)(2-methyl-4-(4'-tris(trifluormethyl)methylphenyl-indenyl) zirkoniumdichlorid
Dimethylsilandiyl(2-methyl-6-azapentalen)(2-methyl-4-(4'-tris(trifluormethyl)methylphenyl-indenyl) zirkoniumdichlorid
Dimethylsilandiyl(2-methyl-N-phenyl-4-azapentalen)(2-methyl-4-(4'-tris(trifluormethyl)methylphenyl-indenyl) zirkoniumdichlorid
Dimethylsilandiyl(2-methyl-N-phenyl-5-azapentalen)(2-methyl-4-(4'-tris(trifluormethyl)methylphenyl-indenyl) zirkoniumdichlorid
Dimethylsilandiyl(2-methyl-N-phenyl-6-azapentalen) (2-methyl-4-(4'-tris(trifluormethyl)methylphenyl-indenyl) zirkoniumdichlorid
Dimethylsilandiyl(2,5-dimethyl-4-azapentalen)(2-methyl-4-(4'-tris(trifluormethyl)methylphenyl-indenyl) zirkoniumdichlorid
Dimethylsilandiyl(2,5-dimethyl-6-azapentalen)(2-methyl-4-(4'-tris(trifluormethyl)methylphenyl-indenyl) zirkoniumdichlorid
Dimethylsilandiyl(2,5-dimethyl-N-phenyl-4-azapentalen) (2-methyl-4-(4'-tris (trifluormethyl)methylphenyl-indenyl) zirkoniumdichlorid
Dimethylsilandiyl(2,5-dimethyl-N-phenyl-6-azapentalen)(2-methyl-4-(4'-tris(trifluormethyl)methylphenyl-indenyl) zirkoniumdichlorid
Dimethylsilandiyl(2-methyl-4-thiapentalen)(2-methyl-4-(4'-tris(trifluormethyl)methylphenyl-indenyl)zirkoniumdichlorid
Dimethylsilandiyl(2-methyl-5-thiapentalen)(2-methyl-4-(4'-tris (trifluormethyl) methylphenyl-indenyl) zirkoniumdichlorid
Dimethylsilandiyl(2-methyl-6-thiapentalen) (2-methyl-4-(4'-tris (trifluormethyl)methylphenyl-indenyl) zirkoniumdichlorid
Dimethylsilandiyl(2,5-dimethyl-4-thiapentalen)(2-methyl-4-(4'-tris(trifluormethyl)methylphenyl-indenyl) zirkoniumdichlorid
Dimethylsilandiyl(2,5-dimethyl-6-thiapentalen)(2-methyl-4-(4'-tris(trifluormethyl)methylphenyl-indenyl) zirkoniumdichlorid
Dimethylsilandiyl(2-methyl-4-oxapentalen)(2-methyl-4-(4'-tris(trifluormethyl)methylphenyl-indenyl)zirkoniumdichlorid
Dimethylsilandiyl(2-methyl-5-oxapentalen) (2-methyl-4-(4'-tris(trifluormethyl)methylphenyl-indenyl)zirkoniumdichlorid
Dimethylsilandiyl(2-methyl-6-oxapentalen) (2-methyl-4-(4'-tris(trifluormethyl)methylphenyl-indenyl)zirkoniumdichlorid
Dimethylsilandiyl(2,5-dimethyl-4-oxapentalen)(2-methyl-4-(4'-tris(trifluormethyl)methylphenyl-indenyl) zirkoniumdichlorid
Dimethylsilandiyl(2,5-dimethyl-6-oxapentalen) (2-methyl-4-(4'-tris(trifluormethyl)methylphenyl-indenyl) zirkoniumdichlorid
Dimethylsilandiyl(2-methyl-4-azapentalen) (2-ethyl-4-(4'-tert-butylphenyl-indenyl) zirkoniumdichlorid
Dimethylsilandiyl(2-methyl-5,6-di-hydro-4-azapentalen)(2-ethyl-4-(4'-tert-butylphenyl-indenyl) zirkoniumdichlorid
Dimethylsilandiyl(2-methyl-4-azapentalen) (2-ethyl-4-(4'-tert-butylphenyl-tetrahydroindenyl) zirkoniumdichlorid
Dimethylsilandiyl(2-methyl-5-azapentalen) (2-n-butyl-4-(4'-tertbutylphenyl-indenyl) zirkoniumdichlorid
Ethyliden(2-methyl-6-azapentalen) (2-methyl-4-(4'-tert-butylphenyl-indenyl) zirkoniumdichlorid
Dimethylsilandiyl(2-methyl-N-trimethylsilyl-4-azapentalen) (2-methyl-4-(4'-tert-butylphenyl-indenyl) zirkoniumdichlorid
Dimethylsilandiyl(2-methyl-N-tolyl-5-azapentalen) (2-n-propyl-4-(4'-tert-butylphenyl-indenyl) zirkoniumdichlorid
Dimethylgermyldiyl(2-methyl-N-phenyl-6-azapentalen)(2-methyl-4-(4'-tert-butylphenyl-indenyl) zirkoniumdichlorid
Methylethyliden(2,5-dimethyl-4-azapentalen) (2-methyl-4-(4'-tertbutylphenyl-indenyl) zirkoniumdichlorid
Dimethylsilandiyl(2,5-di-iso-propyl-6-azapentalen)(2-methyl-4-(4'-tert-butylphenyl-indenyl) zirkoniumdichlorid
Dimethylsilandiyl(2,5-dimethyl-N-phenyl-4-azapentalen) (2,6-dimethyl-4-(4'-tert-butylphenyl-indenyl) zirkoniumdichlorid
Dimethylsilandiyl(2,5-dimethyl-N-phenyl-6-azapentalen) (2-methyl-4-(6'-tert-butylnaphthyl-indenyl) zirkoniumdichlorid
Dimethylsilandiyl(2,5-dimethyl-N-phenyl-6-azapentalen) (2-methyl-4-(6'-tert-butylanthracenyl-indenyl) zirkoniumdichlorid
Dimethylsilandiyl(2-methyl-4-phosphapentalen) (2-methyl-4-(4'-tert-butylphenyl-indenyl) zirkoniumdichlorid
Diphenylsilandiyl(2-methyl-5-thiapentalen) (2-methyl-4-(4'-tert-butylphenyl-indenyl)zirkoniumdichlorid
Methylphenylsilandiyl(2-methyl-6-thiapentalen)(2-methyl-4-(4'-tert-butylphenyl-indenyl)zirkoniumdichlorid
Methyliden(2,5-dimethyl-4-thiapentalen) (2-methyl-4-(4'-tert-butylphenyl-indenyl) zirkoniumdichlorid
Dimethylmethyliden(2,5-dimethyl-6-thiapentalen)(2-methyl-4-(4'-tert-butylphenyl-indenyl) zirkoniumdichlorid
Diphenylsilandiyl(2,5-dimethyl-4-oxapentalen) (2-methyl-4-(4'-tert-butylphenyl-indenyl) zirkoniumdichlorid
Diphenylsilandiyl(2,5-dimethyl-6-oxapentalen) (2-methyl-4-(4'-tert-butylphenyl-indenyl) zirkoniumdichlorid
Dimethylsilandiyl(2-methyl-4-azapentalen) (2-methylindenyl) zirkoniumdichlorid
Dimethylsilandiyl(2-methyl-5-azapentalen)(2-methylindenyl) zirkoniumdichlorid
Dimethylsilandiyl(2-methyl-6-azapentalen) (2-methylindenyl) zirkoniumdichlorid
Dimethylsilandiyl(2-methyl-N-phenyl-4-azapentalen) (2-methylindenyl) zirkoniumdichlorid
Dimethylsilandiyl(2-methyl-N-phenyl-5-azapentalen) (2-methylindenyl) zirkoniumdichlorid
Dimethylsilandiyl(2-methyl-N-phenyl-6-azapentalen) (2-methylindenyl) zirkoniumdichlorid
Dimethylsilandiyl(2,5-dimethyl-4-azapentalen) (2-methylindenyl) zirkoniumdichlorid
Dimethylsilandiyl(2,5-dimethyl-6-azapentalen) (2-methylindenyl) zirkoniumdichlorid
Dimethylsilandiyl(2,5-dimethyl-N-phenyl-4-azapentalen) (2-methylindenyl) zirkoniumdichlorid
Dimethylsilandiyl(2,5-dimethyl-N-phenyl-6-azapentalen) (2-methylindenyl) zirkoniumdichlorid
Dimethylsilandiyl(2-methyl-4-thiapentalen) (2-methylindenyl) zirkoniumdichlorid
Dimethylsilandiyl(2-methyl-5-thiapentalen) (2-methylindenyl) zirkoniumdichlorid
Dimethylsilandiyl(2-methyl-6-thiapentalen) (2-methylindenyl) zirkoniumdichlorid
Dimethylsilandiyl(2,5-dimethyl-4-thiapentalen) (2-methylindenyl) zirkoniumdichlorid
Dimethylsilandiyl(2,5-dimethyl-6-thiapentalen) (2-methylindenyl) zirkoniumdichlorid
Dimethylsilandiyl(2-methyl-4-oxapentalen) (2-methylindenyl) zirkoniumdichlorid
Dimethylsilandiyl(2-methyl-5-oxapentalen) (2-methylindenyl) zirkoniumdichlorid
Dimethylsilandiyl(2-methyl-6-oxapentalen) (2-methylindenyl) zirkoniumdichlorid
Dimethylsilandiyl(2,5-dimethyl-4-oxapentalen) (2-methylindenyl) zirkoniumdichlorid
Dimethylsilandiyl(2,5-dimethyl-6-oxapentalen) (2-methylindenyl) zirkoniumdichlorid
Dimethylsilandiyl(2-methyl-4-azapentalen) (indenyl) zirkoniumdichlorid
Dimethylsilandiyl(2-methyl-5-azapentalen) (indenyl) zirkoniumdichlorid
Dimethylsilandiyl(2-methyl-6-azapentalen) (indenyl) zirkoniumdichlorid
Dimethylsilandiyl(2-methyl-N-phenyl-4-azapentalen) (indenyl) zirkoniumdichlorid
Dimethylsilandiyl(2-methyl-N-phenyl-5-azapentalen) (indenyl) zirkoniumdichlorid
Dimethylsilandiyl(2-methyl-N-phenyl-6-azapentalen) (indenyl) zirkoniumdichlorid
Dimethylsilandiyl(2,5-dimethyl-4-azapentalen) (indenyl) zirkoniumdichlorid
Dimethylsilandiyl(2,5-dimethyl-6-azapentalen) (indenyl) zirkoniumdichlorid
Dimethylsilandiyl(2,5-dimethyl-N-phenyl-4-azapentalen) (indenyl) zirkoniumdichlorid
Dimethylsilandiyl(2,5-dimethyl-N-phenyl-6-azapentalen) (indenyl) zirkoniumdichlorid
Dimethylsilandiyl(2-methyl-4-thiapentalen) (indenyl) zirkoniumdichlorid
Dimethylsilandiyl(2-methyl-5-thiapentalen) (indenyl) zirkoniumdichlorid
Dimethylsilandiyl(2-methyl-6-thiapentalen) (indenyl) zirkoniumdichlorid
Dimethylsilandiyl(2,5-dimethyl-4-thiapentalen) (indenyl) zirkoniumdichlorid
Dimethylsilandiyl(2,5-dimethyl-6-thiapentalen) (indenyl) zirkoniumdichlorid
Dimethylsilandiyl(2-methyl-4-oxapentalen) (indenyl) zirkoniumdichlorid
Dimethylsilandiyl(2-methyl-5-oxapentalen) (indenyl) zirkoniumdichlorid
Dimethylsilandiyl(2-methyl-6-oxapentalen) (indenyl) zirkoniumdichlorid
Dimethylsilandiyl(2,5-dimethyl-4-oxapentalen) (indenyl) zirkoniumdichlorid
Dimethylsilandiyl(2,5-dimethyl-6-oxapentalen) (indenyl) zirkoniumdichlorid
Dimethylsilandiyl(2-methyl-4-azapentalen) (2-methyl-4-phenyl-indenyl) zirkoniumdichlorid
Dimethylsilandiyl(2-methyl-5-azapentalen) (2-methyl-4-phenyl-indenyl) zirkoniumdichlorid
Dimethylsilandiyl(2-methyl-6-azapentalen) (2-methyl-4-phenyl-indenyl) zirkoniumdichlorid
Dimethylsilandiyl(2-methyl-N-phenyl-4-azapentalen) (2-methyl-4-phenyl-indenyl) zirkoniumdichlorid
Dimethylsilandiyl(2-methyl-N-phenyl-5-azapentalen) (2-methyl-4-phenyl-indenyl) zirkoniumdichlorid
Dimethylsilandiyl(2-methyl-N-phenyl-6-azapentalen) (2-methyl-4-phenyl-indenyl) zirkoniumdichlorid
Dimethylsilandiyl(2,5-dimethyl-4-azapentalen) (2-methyl-4-phenylindenyl) zirkoniumdichlorid
Dimethylsilandiyl(2, 5-dimethyl-6-azapentalen) (2-methyl-4-phenylindenyl) zirkoniumdichlorid
Dimethylsilandiyl(2,5-dimethyl-N-phenyl-4-azapentalen) (2-methyl-4-phenyl-indenyl) zirkoniumdichlorid
Dimethylsilandiyl(2,5-dimethyl-N-phenyl-6-azapentalen) (2-methyl-4-phenyl-indenyl) zirkoniumdichlorid
Dimethylsilandiyl(2-methyl-4-thiapentalen) (2-methyl-4-phenyl-indenyl)zirkoniumdichlorid
Dimethylsilandiyl(2-methyl-5-thiapentalen) (2-methyl-4-phenyl-indenyl)zirkoniumdichlorid
Dimethylsilandiyl(2-methyl-6-thiapentalen) (2-methyl-4-phenyl-indenyl)zirkoniumdichlorid
Dimethylsilandiyl(2,5-dimethyl-4-thiapentalen) (2-methyl-4-phenylindenyl) zirkoniumdichlorid
Dimethylsilandiyl(2,5-dimethyl-6-thiapentalen) (2-methyl-4-phenylindenyl) zirkoniumdichlorid
Dimethylsilandiyl(2-methyl-4-oxapentalen) (2-methyl-4-phenyl-indenyl)zirkoniumdichlorid
Dimethylsilandiyl(2-methyl-5-oxapentalen) (2-methyl-4-phenyl-indenyl)zirkoniumdichlorid
Dimethylsilandiyl(2-methyl-6-oxapentalen) (2-methyl-4-phenyl-indenyl)zirkoniumdichlorid
Dimethylsilandiyl(2,5-dimethyl-4-oxapentalen) (2-methyl-4-phenylindenyl) zirkoniumdichlorid
Dimethylsilandiyl(2, 5-dimethyl-6-oxapentalen) (2-methyl-4-phenylindenyl) zirkoniumdichlorid
Dimethylsilandiyl(2-methyl-4-azapentalen) (2-methyl-4,5-benzo-indenyl) zirkoniumdichlorid
Dimethylsilandiyl(2-methyl-5-azapentalen) (2-methyl-4',5-benzo-indenyl) zirkoniumdichlorid
Dimethylsilandiyl(2-methyl-6-azapentalen) (2-methyl-4,5-benzo-indenyl) zirkoniumdichlorid
Dimethylsilandiyl(2-methyl-N-phenyl-4-azapentalen) (2-methyl-4,5-benzo-indenyl) zirkoniumdichlorid
Dimethylsilandiyl(2-methyl-N-phenyl-5-azapentalen) (2-methyl-4,5-benzo-indenyl) zirkoniumdichlorid
Dimethylsilandiyl(2-methyl-N-phenyl-6-azapentalen) (2-methyl-4,5-benzo-indenyl) zirkoniumdichlorid
Dimethylsilandiyl(2,5-dimethyl-4-azapentalen) (2-methyl-4,5-benzoindenyl) zirkoniumdichlorid
Dimethylsilandiyl(2,5-dimethyl-6-azapentalen) (2-methyl-4,5-benzoindenyl) zirkoniumdichlorid
Dimethylsilandiyl(2, 5-dimethyl-N-phenyl-4-azapentalen) (2-methyl-4,5-benzo-indenyl) zirkoniumdichlorid
Dimethylsilandiyl(2,5-dimethyl-N-phenyl-6-azapentalen) (2-methyl-4,5-benzo-indenyl) zirkoniumdichlorid
Dimethylsilandiyl(2-methyl-4-thiapentalen) (2-methyl-4,5-benzo-indenyl)zirkoniumdichlorid
Dimethylsilandiyl(2-methyl-5-thiapentalen) (2-methyl-4,5-benzo-indenyl)zirkoniumdichlorid
Dimethylsilandiyl(2-methyl-6-thiapentalen) (2-methyl-4,5-benzo-indenyl)zirkoniumdichlorid
Dimethylsilandiyl(2,5-dimethyl-4-thiapentalen) (2-methyl-4,5-benzo-indenyl) zirkoniumdichlorid
Dimethylsilandiyl(2, 5-dimethyl-6-thiapentalen) (2-methyl-4,5-benzo-indenyl) zirkoniumdichlorid
Dimethylsilandiyl(2-methyl-4-oxapentalen) (2-methyl-4,5-benzo-indenyl)zirkoniumdichlorid
Dimethylsilandiyl(2-methyl-5-oxapentalen) (2-methyl-4,5-benzo-indenyl)zirkoniumdichlorid
Dimethylsilandiyl(2-methyl-6-oxapentalen) (2-methyl-4,5-benzo-indenyl)zirkoniumdichlorid
Dimethylsilandiyl(2,5-dimethyl-4-oxapentalen) (2-methyl-4,5-benzoindenyl) zirkoniumdichlorid
Dimethylsilandiyl(2,5-dimethyl-6-oxapentalen) (2-methyl-4,5-benzoindenyl) zirkoniumdichlorid
Dimethylsilandiylbis(2-methyl-4-azapentalen) zirkoniumdichlorid
Dimethylsilandiylbis(2-methyl-5-azapentalen) zirkoniumdichlorid
Dimethylsilandiylbis(2-methyl-6-azapentalen) zirkoniumdichlorid
Dimethylsilandiylbis(2-methyl-N-phenyl-4-azapentalen) zirkoniumdichlorid
Dimethylsilandiylbis(2-methyl-N-phenyl-5-azapentalen) zirkoniumdichlorid
Dimethylsilandiylbis(2-methyl-N-phenyl-6-azapentalen) zirkoniumdichlorid
Dimethylsilandiylbis(2,5-dimethyl-4-azapentalen) zirkoniumdichlorid
Dimethylsilandiylbis(2,5-dimethyl-6-azapentalen) zirkoniumdichlorid
Dimethylsilandiylbis(2,5-dimethyl-N-phenyl-4-azapentalen) zirkoniumdichlorid
Dimethylsilandiylbis(2,5-dimethyl-N-phenyl-6-azapentalen) zirkoniumdichlorid
Dimethylsilandiylbis(2-methyl-4-thiapentalen)zirkoniumdichlorid
Dimethylsilandiylbis (2-methyl-5-thiapentalen) zirkoniumdichlorid
Dimethylsilandiylbis(2-methyl-6-thiapentalen)zirkoniumdichlorid
Dimethylsilandiylbis(2,5-dimethyl-4-thiapentalen) zirkoniumdichlorid
Dimethylsilandiylbis (2,5-dimethyl-6-thiapentalen) zirkoniumdichlorid
Dimethylsilandiylbis(2-methyl-4-oxapentalen)zirkoniumdichlorid
Dimethylsilandiylbis(2-methyl-5-oxapentalen) zirkoniumdichlorid
Dimethylsilandiylbis(2-methyl-6-oxapentalen) zirkoniumdichlorid
Dimethylsilandiylbis(2,5-dimethyl-4-oxapentalen)zirkoniumdichlorid
Dimethylsilandiylbis(2, 5-dimethyl-6-oxapentalen) zirkoniumdichlorid
Des weiteren sind die Metallocene, bei denen das Zirkoniumfragment "-zirkonium-dichlorid" die Bedeutungen
Zirkonium-monochloro-mono-(2,4-di-tert.-butyl-phenolat)
Zirkonium-monochloro-mono-(2,6-di-tert.-butyl-phenolat)
Zirkonium-monochloro-mono-(3,5-di-tert.-butyl-phenolat)
Zirkonium-monochloro-mono-(2,6-di-sec.-butyl-phenolat)
Zirkonium-monochloro-mono-(2,4-di-methylphenolat)
Zirkonium-monochloro-mono-(2,3-di-methylphenolat)
Zirkonium-monochloro-mono-(2,5-di-methylphenolat)
Zirkonium-monochloro-mono-(2,6-di-methylphenolat)
Zirkonium-monochloro-mono-(3,4-di-methylphenolat)
Zirkonium-monochloro-mono-(3,5-di-methylphenolat)
Zirkonium-monochloro-monophenolat
Zirkonium-monochloro-mono-(2-methylphenolat)
Zirkonium-monochloro-mono-(3-methylphenolat)
Zirkonium-monochloro-mono-(4-methylphenolat)
Zirkonium-monochloro-mono-(2-ethylphenolat)
Zirkonium-monochloro-mono-(3-ethylphenolat)
Zirkonium-monochloro-mono-(4-ethylphenolat)
Zirkonium-monochloro-mono-(2-sec.-butylphenolat)
Zirkonium-monochloro-mono-(2-tert.-butylphenolat)
Zirkonium-monochloro-mono-(3-tert.-butylphenolat)
Zirkonium-monochloro-mono-(4-sec.-butylphenolat)
Zirkonium-monochloro-mono-(4-tert.-butylphenolat)
Zirkonium-monochloro-mono-(2-isopropyl-5-methylphenolat)
Zirkonium-monochloro-mono-(4-isopropyl-3-methylphenolat)
Zirkonium-monochloro-mono-(5-isopropyl-2-methylphenolat)
Zirkonium-monochloro-mono-(5-isopropyl-3-methylphenolat)
Zirkonium-monochloro-mono-(2,4-bis-(2-methyl-2-butyl)-phenolat)
Zirkonium-monochloro-mono-(2,6-di-tert.-butyl-4-methyl-phenolat)
Zirkonium-monochloro-mono-(4-nonylphenolat)
Zirkonium-monochloro-mono-(1-naphtholat)
Zirkonium-monochloro-mono-(2-naphtholat)
Zirkonium-monochloro-mono-(2-phenylphenolat)
Zirkonium-monochloro-mono-(tert. butoxid)
Zirkonium-monochloro-mono-(N-methylanilid)
Zirkonium-monochloro-mono-(2-tert.-butylanilid)
Zirkonium-monochloro-mono-(tert.-butylamid)
Zirkonium-monochloro-mono- (di-iso.-propylamid)
Zirkonium-monochloro-mono-methyl
Zirkonium-monochloro-mono-benzyl
Zirkonium-monochloro-mono-neopentyl, hat, Beispiele für die in den erfindungsgemäßen Verfahren einsetzbare Metallocene.

Weiterhin bevorzugt sind die entsprechenden Zirkoniumdimethyl-Verbindungen, die entsprechenden Zirkonium-η⁴-Butadien-Verbindungen.

Das bevorzugte erfindungsgemäße Katalysatorsystem enthält mindestens ein Hauptgruppenalkyl B), wobei B) besonders bevorzugt eine Verbindung der Formel (V) ist, meist eine Organometallverbindung, die in jedem beliebigen stöchiometrischen Verhältnis mit Verbindungen der Formel (III) und (IV) umgesetzt werden kann.

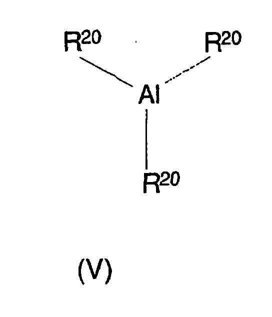

Die Reste R²⁰ in Formel (V) können gleich oder verschieden sein und ein Halogenatom, ein Wasserstoffatom, eine C₁-C₄₀-kohlenstoffhaltige Gruppe, bevorzugt C₁-C₂₀-Alkyl, C₁-C₂₀-Halogenalkyl, C₆-C₂₀-Aryl, C₆-C₂₀-Halogenaryl, C₇-C₄₀-Arylalkyl, C₇-C₄₀-Halogenarylalkyl, C₇-C₄₀-Alkylaryl oder C₇-C₄₀-Halogenalkylaryl, bedeuten. Bevorzugt für R²⁰ sind C₁-C₆-Alkyl-Gruppen, besonders bevorzugt für R²⁰ sind C₁-C₄-Alkyl-Gruppen.

Zur Umsetzung von Verbindungen der Formel (III) und (IV) mit Verbindungen der Formel (V) können diese in einem Lösungsmittel gelöst oder suspendiert sein. Die Umsetzung kann aber auch in Substanz erfolgen. Als Lösungsmittel dienen die bereits oben beschriebenen, vorzugsweise wird das gleiche Lösungsmittel verwendet. Die Umsetzung erfolgt im allgemeinen über einen Zeitraum von 1 Minute bis zu 96 Stunden. Bevorzugt ist eine Umsetzung innerhalb von 10 Minuten bis zu 8 Stunden. Die Temperatur der Vorlage liegt bei der Zugabe zwischen -100°C und 200°C. Bevorzugt sind Temperaturen zwischen -80°C und 150°C. Besonders bevorzugt sind Temperaturen zwischen 20°C und 150°C. Die Temperatur wird so gewählt, daß zumindest ein Reaktionspartner in flüssiger Phase vorliegen. Die anschließende Reaktionstemperatur liegt in einem bevorzugten Temperaturbereich zwischen 20°C und 150°C. Desweiteren kann die Umsetzung unter Normaldruck oder unter erhöhtem Druck durchgeführt werden, was jedoch entsprechende Reaktoren voraussetzt. Das molare Verhältnis, in dem die Verbindungen der Formel (III) und (IV) mit der chemischen Verbindung der Formel (V) zusammengegeben werden, liegt, bezogen auf eingesetzter Menge M³ oder M⁴ der Verbindugen der Formel (III) und (IV), zwischen 1000 : 1 und 0.01 :1.

Bevorzugt ist ein molares Verhältnis zwischen Verbindungen der Formel (III) und (IV) mit der chemischen Verbindung der Formel (V), bezogen auf eingesetzte Menge M³ oder M⁴ der Verbindugen der Formel (III) und (IV), zwischen 100 :1 und 1:1.

Bei der Herstellung des erfindungsgemäßen Katalysatorsystems wird ein Mol-Verhältnis Aluminium : M⁴ zwischen den Verbindungen der Formeln (III) und der Formel (IV) von 10000 bis 0.01 eingesetzt. Bevorzugt wird ein Mol-Verhältnis von 1000 bis 0.1, ganz besonders bevorzugt wird ein Mol-Verhältnis von 100 bis 1 eingesetzt. Hierzu kann eine Verbindung der Formel (V) in einem Mol-Verhältnis Al : M⁴ von 10000 bis 0.01 zusätzlich zugegeben werden. Bevorzugt wird ein Mol-Verhältnis von 1000 bis 0.1, ganz besonders bevorzugt wird ein Mol-Verhältnis von 100 bis 1 eingesetzt.

Die Verbindungen können in jeder denkbaren Kombination miteinander in Kontakt gebracht werden. Eine mögliche Verfahrensweise ist, daß eine Organoübergangsmetallverbindung der Formel (IV) in einem aliphatischen oder aromatischen Lösungsmittel wie Toluol, Heptan, Tetrahydrofuran oder Diethylether gelöst bzw. suspendiert wird. Danach wird eine Verbindung der Formel (V) in gelöster bzw. in suspendierter Form zugegeben. Die Reaktionszeit liegt zwischen 1 Minute und 24 Stunden, wobei eine Reaktionszeit zwischen 5 Minuten und 120 Minuten bevorzugt wird. Die Reaktionstemperatur liegt zwischen -10°C und + 200°C, wobei eine Temperatur zwischen 0 °C und 50 °C bevorzugt wird. Im Anschluß daran wird eine Organoaluminiumverbindung der Formel (III) entweder in Substanz oder in gelöster bzw. in suspendierter Form zugegeben. Die Reaktionszeit liegt zwischen 1 Minute und 24 Stunden, wobei eine Reaktionszeit zwischen 5 Minuten und 120 Minuten bevorzugt wird. Die Reaktionstemperatur liegt zwischen -10°C und + 200°C, wobei eine Temperatur zwischen 0°C und 50°C bevorzugt wird. Die einzelnen Komponenten können auch nacheinander, in beliebiger Reihenfolge, in den Polymerisationskessel eingegeben werden.

Wahlweise kann das erfindungsgemäße Katalysatorsystem auch geträgert eingesetzt werden. Dazu kann das erfindungsgemäße Katalysatorsystem mit einer Trägerkomponente umgesetzt werden.

Das bevorzugte erfindungsgemäße Katalysatorsystem enthält eine Trägerkomponente C), die ein beliebiger organischer oder anorganischer, inerter Feststoff sein kann. Bevorzugt sind insbesondere poröse Träger wie Talk, anorganische Oxide, Mischoxide und feinteilige Polymerpulver (z.B. Polyolefine).

Geeignete anorganische Oxide finden sich in der II-VI Hauptgruppe des Periodensystems und der III-IV Nebengruppe des Periodensystems der Elemente. Beispiele für als Träger bevorzugte Oxide umfassen Siliciumdioxid, Aluminiumoxid, sowie Mischoxide der beiden Elemente und entsprechende Oxid-Mischungen. Andere anorganische Oxide, die allein oder in Kombination mit den zuletzt genannten bevorzugten oxidischen Trägern eingesetzt werden können, sind z.B. MgO, ZrO₂ , TiO₂ oder B₂O₃.

Die verwendeten Trägermaterialien weisen im allgemeinen eine spezifische Oberfläche im Bereich von 10 bis 1000 m²/g, ein Porenvolumen im Bereich von 0,1 bis 5 ml/g und eine mittlere Partikelgröße von 1 bis 500 µm auf. Bevorzugt sind Träger mit einer spezifischen Oberfläche im Bereich von 50 bis 500 µm, einem Porenvolumen im Bereich zwischen 0,5 und 3,5 ml/g und einer mittleren Partikelgröße im Bereich von 5 bis 350 µm. Besonders bevorzugt sind Träger mit einer spezifischen Oberfläche im Bereich von 200 bis 400 m²/g, einem Porenvolumen im Bereich zwischen 0,8 bis 3,0 ml/g und einer mittleren Partikelgröße von 10 bis 200 µm.

Wenn das verwendete Trägermaterial von Natur aus einen geringen Feuchtigkeitsgehalt oder Restlösungsmittelgehalt aufweist, kann eine Dehydratisierung oder Trocknung vor der Verwendung unterbleiben. Ist dies nicht der Fall, wie bei dem Einsatz von Silicagel als Trägermaterial, ist eine Dehydratisierung oder Trocknung empfehlenswert. Die thermische Dehydratisierung oder Trocknung des Trägermaterials kann unter Vakuum und gleichzeitiger Inertgasüberlagerung (z.B. Stickstoff) erfolgen. Die Trocknungstemperatur liegt im Bereich zwischen 100 und 1000°C, vorzugsweise zwischen 200 und 800°C. Der Parameter Druck ist in diesem Fall nicht entscheidend. Die Dauer des Trocknungsprozesses kann zwischen 1 und 24 Stunden betragen. Kürzere oder längere Trocknungsdauern sind möglich, vorausgesetzt, daß unter den gewählten Bedingungen die Gleichgewichtseinstellung mit den Hydroxylgruppen auf der Trägeroberfläche erfolgen kann, was normalerweise zwischen 4 und 8 Stunden erfordert.

Eine Dehydratisierung oder Trocknung des Trägermaterials ist auch auf chemischem Wege möglich, indem das adsorbierte Wasser und die Hydroxylgruppen auf der Oberfläche mit geeigneten Inertisierungsmitteln zur Reaktion gebracht werden. Durch die Umsetzung mit dem Inertisierungsreagenz können die Hydroxylgruppen vollständig oder auch teilweise in eine Form überführt werden, die zu keiner negativen Wechselwirkung mit den katalytisch aktiven Zentren führen. Geeignete Inertisierungsmittel sind beispielsweise Siliciumhalogenide und Silane, wie Siliciumtetrachlorid, Chlortrimethylsilan, Dimethylaminotrichlorsilan oder metallorganische Verbindungen von Aluminium, Bor und Magnesium wie beispielsweise Trimethylaluminium, Triethylaluminium, Triisobutylaluminium, Triethylboran, Dibutylmagnesium. Die chemische Dehydratisierung oder Inertisierung des Trägermaterials erfolgt beispielsweise dadurch, daß man unter Luft- und Feuchtigkeitsausschluß eine Suspension des Trägermaterials in einem geeigneten Lösungsmittel mit dem Inertisierungsreagenz in reiner Form oder gelöst in einem geeigneten Lösungsmittel zur Reaktion bringt. Geeignete Lösungsmittel sind z.B. aliphatische oder aromatische Kohlenwasserstoffe wie Pentan, Hexan, Heptan, Toluol oder Xylol. Die Inertisierung erfolgt im allgemeinen bei Temperaturen zwischen 25°C und 120°C, bevorzugt zwischen 50°C und 70°C. Die Dauer der Reaktion beträgt zwischen 30 Minuten und 20 Stunden, bevorzugt 1 bis 5 Stunden. Nach dem vollständigen Ablauf der chemischen Dehydratisierung kann das Trägermaterial durch Filtration unter Inertbedingungen isoliert, einoder mehrmals mit geeigneten zuvor beschriebenen inerten Lösemitteln gewaschen und anschließend im Inertgasstrom oder am Vakuum getrocknet werden.

Organische Trägermaterialien wie feinteilige Polyolefinpulver (z.B. Polyethylen, Polypropylen oder Polystyrol) können auch verwendet werden und sollten ebenfalls vor dem Einsatz von anhaftender Feuchtigkeit, Lösungsmittelresten oder anderen Verunreinigungen durch entsprechende Reinigungs- und Trocknungsoperationen befreit werden.

Zur Trägerung des erfindungsgemäßen Katalysatorsystems wird die oben hergestellte Katalysatormischung mit einem dehydratisierten oder inertisierten Trägermaterial vermischt, das Lösungsmittel entfernt und das resultierende geträgerte Metallocen-Katalysatorsystem getrocknet, um sicherzustellen, daß das Lösungsmittel vollständig oder zum größten Teil aus den Poren des Trägermaterials entfernt wird. Der geträgerte Katalysator wird als frei fließendes Pulver erhalten.

Die vorliegende Erfindung betrifft auch ein Verfahren zur Herstellung eines Polyolefins durch Polymerisation einer oder mehrerer Olefine in Gegenwart des erfindungsgemäßen Katalysatorsystems, enthaltend vorzugsweise mindestens eine Organometallkomponente der Formel (V). Unter dem Begriff Polymerisaton wird eine Homopolymerisation wie auch eine Copolymerisation verstanden:

Bevorzugt werden Olefine der Formel Rₘ-CH=CH-Rₙ polymerisiert, worin Rₘ und Rₙ gleich oder verschieden sind und ein Wasserstoffatom oder einen kohlenstoffhaltigen Rest mit 1 bis 20 C-Atomen, insbesondere 1 bis 10 C-Atomen, bedeuten, und Rₘ und Rₙ zusammen mit den sie verbindenden Atomen einen oder mehrere Ringe bilden können.

Beispiele für solche Olefine sind 1-Olefine mit 2 - 40, vorzugsweise 2 bis 10 Kohlenstoffatomen, wie Ethen, Propen, 1-Buten, 1-Penten, 1-Hexen, 4-Methyl-1-penten oder 1-Octen, Styrol, Diene wie 1,3-Butadien, 1,4-Hexadien, Vinylnorbornen, Norbornadien, Ethylnorbornadien und cyclische Olefine wie Norbornen, Tetracyclododecen oder Methylnorbornen. Bevorzugt werden im erfindungsgemäßen Verfahren Propen oder Ethen homopolymerisiert, oder Propen mit Ethen und/oder mit einem oder mehreren 1-Olefinen mit 4 bis 20 C-Atomen, wie Hexen, und/oder einem oder mehreren Dienen mit 4 bis 20 C-Atomen, wie 1,4-Butadien, Norbornadien, Ethylidennorbonen oder Ethylnorbornadien, copolymerisiert. Beispiele solcher Copolymere sind Ethen/Propen-Copolymere oder Ethen/Propen/1,4-Hexadien-Terpolymere.

Die Polymerisation wird bei einer Temperatur von -60°C bis 300°C , bevorzugt 50°C bis 200°C, ganz besonders bevorzugt 50°C - 80°C durchgeführt. Der Druck beträgt 0,5 bis 2000 bar, bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden.

Das erf indungsgemäß dargestellte Katalysatorsystem kann als einzige Katalysatorkomponente für die Polymerisation von Olefinen mit 2 bis 20 C-Atomen eingesetzt werden, oder bevorzugt in Kombination mit mindestens einer Alkylverbindung der Elemente aus der I. bis III. Hauptgruppe des Periodensystems, wie z.B. einem Aluminium-, Magnesium- oder Lithiumalkyl oder einem Aluminoxan eingesetzt werden. Die Alkylverbindung wird dem Monomeren oder Suspensionsmittel zugesetzt und dient zur Reinigung des Monomeren von Substanzen, die die Katalysatoraktivität beeinträchtigen können. Die Menge der zugesetzten Alkylverbindung hängt von der Qualität der eingesetzten Monomere ab.

Als Molmassenregler und/oder zur Steigerung der Aktivität wird, falls erforderlich, Wasserstoff zugegeben.

Das geträgerte Katalysatorsystem kann direkt zur Polymerisation eingesetzt werden. Es kann aber auch nach Entfernen des Lösungsmittels resuspendiert zur Polymerisation eingesetzt werden. Der Vorteil dieser Aktivierungsmethode liegt darin, daß es die Option bietet, das polymerisationsaktive Katalysatorsystem erst im Reaktor zu bilden. Dadurch wird verhindert, daß beim Einschleusen des luftempfindlichen Katalysators zum Teil Zersetzung eintritt.

Weiterhin kann erfindungsgemäß ein Additiv wie ein Antistatikum verwendet werden, z.B. zur Verbesserung der Kornmorphologie des Polymers.

Generell können alle Antistatika, die für die Polymerisation geeignet sind, verwendet werden. Beispiele hierfür sind Salzgemische aus Calciumsalzen der Medialansäure und Chromsalze der N-Stearylanthranilsäure, die in DE-A-3,543,360 beschreiben werden. Weitere geeignete Antistatika sind z.B. C₁₂- bis C₂₂- Fettsäureseifen von Alkali- oder Erdalkalimetallen, Salze von Sulfonsäureestern, Ester von Polyethylenglycolen mit Fettsäuren, Polyoxyethylenalkylether usw. Eine Übersicht über Antistatika wird in EP-A-0,107,127 angegeben.

Außerdem kann als Antistatikum eine Mischung aus einem Metallsalz der Medialansäure, einem Metallsalz der Anthranilsäure und einem Polyamin eingesetzt werden, wie in EP-A-0,636,636 beschrieben.

Kommerziell erhältliche Produkte wie Stadis® 450 der Fa. DuPont, eine Mischung aus Toluol, Isopropanol, Dodecylbenzolsulfonsäure, einem Polyamin, einem Copolymer aus Dec-1-en und SO₂ sowie Dec-1-en oder ASA®-3 der Fa. Shell und ARU5R® 163 der Firma ICI können ebenfalls verwendet werden.

Vorzugsweise wird das Antistatikum als Lösung eingesetzt, im bevorzugten Fall von Stadis® 450 werden bevorzugt 1 bis 50 Gew.-% dieser Lösung, vorzugsweise 5 bis 25 Gew.-%, bezogen auf die Masse des eingesetzten Trägerkatalysators (Träger mit kovalent fixierter metalloceniumbildende Verbindung und eine oder mehrere Metallocenverbindungen z.B. der Formel IV) eingesetzt. Die benötigten Mengen an Antistatikum können jedoch, je nach Art des eingesetzten Antistatikums, in weiten Bereichen schwanken.

Die mit dem erfindungsgemäßen Katalysatorsystem dargestellten Polymere zeigen eine gleichmäßige Kornmorphologie und weisen keine Feinkornanteile auf. Bei der Polymerisation mit dem erfindungsgemäßen Katalysatorsytem treten keine Beläge oder Verbackungen auf.

Die nach dem erfindungsgemäßen Verfahren hergestellten Polymere sind insbesondere zur Herstellung reißf ester, harter und steifer Formkörper wie Fasern, Filamente, Spritzgußteile, Folien, Platten oder Großhohlkörpern (z.B. Rohre) geeignet.

Die zuvor allgemein beschriebene Herstellung eines erfindungsgemäßen Katalysatorsystems kann nach zwei verschiedenen Methoden erfolgen, die auf Physisorption oder kovalenter Trägerung basieren. Die in beiden Methoden angewandte Reihenfolge der Schritte sei nachfolgend beschrieben:

### Methode 1 (Physisorption):

Im Schritt 1 wird ein anorganisches Trägermaterial (C) mit einer Metallverbindung der Formel (V) umgesetzt. Vorzugsweise wird die Metallverbindung der allgemeinen Formel (V) als Lösung zu einer Suspension des Trägers gegeben. Als Lösungs- bzw. Suspensionsmittel sind die unter B beschriebenen zu verwenden. Die Menge an Metallverbindungen der Formel (V) kann in weiten Grenzen variieren, die Mindestmenge richtet sich nach der Anzahl der Hydroxygruppen des Trägers. Temperatur, Reaktionszeiten und Drücke sind an sich unkritisch, bevorzugt sind die unter Methode 2 beschriebenen Temperaturen und Reaktionszeiten. Es hat sich als geeignet erwiesen, nach Trägervorbehandlung die überschüssige Metallverbindung der Formel (V) durch Auswaschen, beispielsweise mit Kohlenwasserstoffen wie Pentan, Hexan, Ethylbenzol oder Heptan, zu entfernen und den Träger zu trocknen.

Dieses Material wird nun im Schritt 2 mit einem Metallocenkomplex der Formel (IV) und einer oder mehreren der erfindungsgemäßen Verbindungen, die vorzugsweise Verbindungen der Formel III enthalten, umgesetzt. Es können auch Mischungen verschiedener Metallocenkomplexe eingesetzt werden.

Die Bedingungen für die Umsetzung des Metallocenkomplexes mit der erfindungsgemäßen Verbindung sind an sich unkritisch, bevorzugt arbeitet man in Lösung, wobei als Lösungsmittel insbesondere Kohlenwasserstoffe, vorzugsweise aromatische Kohlenwasserstoffe wie Toluol, geeignet sind.

Eine Menge von 0.1 bis 10 Gew.-% an Metallocenkomplex, bezogen auf das anorganische Trägermaterial, ist besonders geeignet. Die Bedingungen für diese Umsetzung sind ebenfalls nicht kritisch. Temperaturen im Bereich von 20 bis 80°C und Reaktionszeiten im Bereich von 0.1 bis 20 Stunden haben sich als besonders geeignet erwiesen.

In einem weiteren Schritt 3 wird das nach Schritt 2 erhaltene Material mit einer Metallverbindung der allgemeinen Formel (V) umgesetzt. Diese Aktvierung kann zu einem beliebigen Zeitpunkt, d. h. vor, bei oder nach der Dosierung des nach Schritt 2 erhaltenen Materials in den Reaktor, erfolgen. Vorzugsweise erfolgt die Aktivierung nach der Dosierung des nach Schritt 2 erhaltenen Materials im Reaktor.

Die erfindungsgemäßen chemischen Produkte, insbesondere solche, die Verbindungen der Formel (III) enthalten, zeichnen sich bei Verwendung als Cokatalysatoren in der Olefinpolymerisation insbesondere durch eine hohe Aktivität aus. Außerdem können sie lange gelagert werden; sie sind nicht pyrophor und gut löslich.

### Methode 2 (Kovalente Trägerung)

Das erf indungsgemäße Katalysatorsystem kann zusätzlich noch eine Lewis Base der Formel (VI) enthalten

M⁶R²¹R²²R²³ (VI)

worin
- M⁶: für ein Element der V. Hauptgruppe des Periodensystems der Elemente steht,
- R²¹, R²², R²³: gleich oder verschieden sind und für ein Wasserstoffatom, eine C₁-C₂₀-Alkyl-, C₂-C₂₀-Halogenalkyl-, C₆-C₄₀-Aryl-, C₆-C₄₀-Halogenaryl-, C₇-C₄₀-Alkylaryloder C₇-C₄₀-Arylalkyl-Gruppe stehen, wobei gegebenenfalls zwei Reste oder alle drei Reste R²¹, R²² und R²³ über C₂-C₂₀-Kohlenstoffeinheiten miteinander verbunden sein können, wobei mindestens ein Rest R²¹, R²² oder R²³ kein Wasserstoffatom oder keine lineare Alkylkette darstellt.

Bevorzugt sind Lewis-Basen der Formel (VI) , worin R²¹, R²² und R²³ gleich oder verschieden sind und für ein Wasserstoffatom, eine C₁-C₂₀-Alkyl-, C₁-C₂₀-Halogenalkyl-, C₆-C₄₀-Aryl- C₆₋C₄₀-Halogenaryl-, C₇-C₄₀-Alkylaryl- oder C₇-C₄₀-Arylalkyl-Gruppe stehen, wobei gegebenenfalls zwei Reste oder alle drei Reste R²¹, R²² und R²³ über C₂-C₂₀-Kohlenstoffeinheiten miteinander verbunden sein können und wobei mindestens ein Rest R²¹, R²² und R²³ für einen Rest mit 2 bis 20 Kohlenstoffatomen oder aromatische Gruppen, die gegebenenfalls substituiert sein können, und/oder Heteroatome, ausgewählt aus der Gruppe P, O, S, N enthalten kann, steht. Bevorzugt steht mindestens ein Rest R²¹, R²² und R²³ für eine Alkyl-Aryl-Gruppe, insbesondere für eine benzylische Gruppe.

Bevorzugt ist M⁶ Stickstoff.

Nicht limitierende Beispiele für Lewis-Basen der Formel (VI) sind:
N, N-Dimethylcyclohexylamin, N, N-Diethylcyclohexylamin, N, N-Dimethylisopropylamin, N, N-Diethylbenzylamin, N, N-Dimethyl-p-toluidinamin, N, N-Diethyl-p-toluidinamin N, N-Dimethylbenzylamin, N, N-Diethylisopropylamin, N, N-Diisopropylmethylamin, N, N-Diisopropylethylamin, N, N- Dimethylcyclopentylamin, N, N-Dimethylcycloheptenylamin, N, N-Dimethylcyclooctanylamin, N, N-Dimethylnonanoylamin, N, N- Diethylcyclopentylamin, N, N-Diethylcycloheptenylamin, N, N-Diethylcyclooctanylamin, N, N-Diethylnonanoylamin
N-Benzyldimethylamin, N-Benzyldiethylamin, N-Benzylbutylamin, N-Benzyl tert.-butylamin, N'-Benzyl-N,N-dimethylethylendiamin, N-Benzylethylendiamin, N-Benzylisopropylamin, N-Benzylmethylamin, N-Benzylethylamin, N-Benzyl-1-phenylethylamin, N-Benzyl-2-phenylethylamin, oder N-Benzylpiperazin
N,N-Dimethylisopropylamin, N,N-Dimethyl-2-butylamin, N,N-Dimethyl-isobutylamin, N,N-Dimethyl-2-pentylamin, N,N-Dimethyl-3-pentylamin, N,N-Dimethyl-2-methylbutylamin, N,N-Dimethyl-3-methylbutylamin, N,N-Dimethyl-cyclopentylamin, N,N-Dimethyl-2-hexylamin, N,N-Dimethyl-3-hexylamin, N,N-Dimethyl-2-methylpentylamin, N,N-Dimethyl-3-methylpentylamin, N,N-Dimethyl-4-methylpentylamin, N,N-Dimethyl-2-ethylbutylamin, N,N-Dimethyl-cyclohexylamin, N,N-Dimethyl-2-heptylamin, N,N-Dimethyl-3-heptylamin, N,N-Dimethyl-4-heptylamin,N,N-Dimethyl-2-methylhexylamin, N,N-Dimethyl-3-methylhexylamin, N,N-Dimethyl-4-methylhexylamin, N,N-Dimethyl-5-methylhexylamin, N,N-Dimethyl-2-ethylpentylamin, N,N-Dimethyl-3-ethylpentylamin, N,N-Dimethyl-2-propylbutylamin, N,N-Dimethyl-cycloheptylamin, N,N-Dimethyl-methylcyclohexylamin, N,N-Dimethyl-benzylamin, N,N-Dimethyl-2-octylamin, N,N-Dimethyl-3-octylamin
N,N-Dimethyl-4-octylamin,N,N-Dimethyl-2-methylheptylamin, N,N-Dimethyl-3-methylheptylamin, N,N-Dimethyl-4-methylheptylamin, N,N-Dimethyl-5-methylheptylamin, N,N-Dimethyl-6-methylheptylamin, N,N-Dimethyl-2-ethylhexylamin, N,N-Dimethyl-3-ethylhexylamin, N,N-Dimethyl-4-ethylhexylamin, N,N-Dimethyl-2-propylpentylamin, N,N-Dimethyl-cyclooctylamin, N,N-Dimethyl-dimethylcyclohexylamin, N,N-Diethylisopropylamin, N,N-Diethyl-2-butylamin, N,N-Diethylisobutylamin, N,N-Diethyl-2-pentylamin, N,N-Diethyl-3-pentylamin, N,N-Diethyl-2-methylbutylamin, N,N-Diethyl-3-methylbutylamin, N,N-Diethyl-cyclopentylamin, N,N-Diethyl-2-hexylamin, N,N-Diethyl-3-hexylamin, N,N-Diethyl-2-methylpentylamin, N,N-Diethyl-3-methylpentylamin, N,N-Diethyl-4-methylpentylamin, N,N-Diethyl-2-ethylbutylamin, N,N-Diethyl-cyclohexylamin, N,N-Diethyl-2-heptylamin, N,N-Diethyl-3-heptylamin, N,N-Diethyl-4-heptylamin, N,N-Diethyl-2-methylhexylamin, N,N-Diethyl-3-methylhexylamin, N,N-Diethyl-4-methylhexylamin, N,N-Diethyl-5-methylhexylamin,N,N-Diethyl-2-ethylpentylamin, N,N-Diethyl-3-ethylpentylamin, N,N-Diethyl-2-propylbutylamin, N,N-Diethyl-cycloheptylamin, N,N-Diethyl-methylcyclohexylamin, N,N-Diethyl-benzylamin, N,N-Diethyl-2-octylamin, N,N-Diethyl-3-octylamin, N,N-Diethyl-4-octylamin, N,N-Diethyl-2-methylheptylamin, N,N-Diethyl-3-methylheptylamin, N,N-Diethyl-4-methylheptylamin, N,N-Diethyl-5-methylheptylamin, N,N-Diethyl-6-methylheptylamin, N,N-Diethyl-2-ethylhexylamin, N,N-Diethyl-3-ethylhexylamin, N,N-Diethyl-4-ethylhexylamin, N,N-Diethyl-2-propylpentylamin, N,N-Diethyl-cyclooctylamin, N,N-Diethyl-dimethylcyclohexylamin, N-Methyl-N-Ethyl-isopropylamin, N-Methyl-N-Ethyl-2-butylamin, N-Methyl-N-Ethyl-isobutylamin, N-Methyl-N-Ethyl-2-pentylamin, N-Methyl-N-Ethyl-3-pentylamin, N-Methyl-N-Ethyl-2-methylbutylamin, N-Methyl-N-Ethyl-3-methylbutylamin, N-Methyl-N-Ethyl-cyclopentylamin, N-Methyl-N-Ethyl-2-hexylamin, N-Methyl-N-Ethyl-3-hexylamin, N-Methyl-N-Ethyl-2-methylpentylamin, N-Methyl-N-Ethyl-3-methylpentylamin, N-Methyl-N-Ethyl-4-methylpentylamin, N-Methyl-N-Ethyl-2-ethylbutylamin, N-Methyl-N-Ethyl-cyclohexylamin, N-Methyl-N-Ethyl-2-heptylamin, N-Methyl-N-Ethyl-3-heptylamin
N-Methyl-N-Ethyl-4-heptylamin, N-Methyl-N-Ethyl-2-methylhexylamin
N-Methyl-N-Ethyl-3-methylhexylamin, N-Methyl-N-Ethyl-4-methylhexylamin, N-Methyl-N-Ethyl-5-methylhexylamin, N-Methyl-N-Ethyl-2-ethylpentylamin, N-Methyl-N-Ethyl-3-ethylpentylamin, N-Methyl-N-Ethyl-2-propylbutylamin, N-Methyl-N-Ethyl-cycloheptylamin, N-Methyl-N-Ethyl-methylcyclohexylamin, N-Methyl-N-Ethyl-benzylamin, N-Methyl-N-Ethyl-2-octylamin, N-Methyl-N-Ethyl-3-octylamin, N-Methyl-N-Ethyl-4-octylamin, N-Methyl-N-Ethyl-2-methylheptylamin, N-Methyl-N-Ethyl-3-methylheptylamin, N-Methyl-N-Ethyl-4-methylheptylamin, N-Methyl-N-Ethyl-5-methylheptylamin, N-Methyl-N-Ethyl-6-methylheptylamin, N-Methyl-N-Ethyl-2-ethylhexylamin, N-Methyl-N-Ethyl-3-ethylhexylamin, N-Methyl-N-Ethyl-4-ethylhexylamin, N-Methyl-N-Ethyl-2-propylpentylamin, N-Methyl-N-Ethyl-cyclooctylamin, N-Methyl-N-Ethyl-dimethylcyclohexylamin, N-Methyl-diisopropylamin, N-Methyl-bis (2-butyl) amin, N-Methyl-bis(isobutyl)amin, N-Methyl-bis(2-pentyl)amin, N-Methylbis (3-pentyl) amin, N-Methyl-bis(2-methylbutyl)amin, N-Methylbis (3-methylbutyl) amin, N-Methyl-dicyclopentylamin, N-Methylbis (2-hexyl) amin, N-Methyl-bis(3-hexyl)amin, N-Methyl-bis(2-methylpentyl)amin, N-Methyl-bis(3-methylpentyl)amin, N-Methylbis (4-methylpentyl) amin, N-Methyl-bis (2-ethylbutyl) amin, N-Methyl-dicyclohexylamin, N-Methyl-bis(2-heptyl)amin, N-Methylbis(3-heptyl)amin, N-Methyl-bis(4-heptyl)amin, N-Methyl-bis(2-methylhexyl)amin, N-Methyl-bis(3-methylhexyl)amin, N-Methylbis(4-methylhexyl)amin, N-Methyl-bis(5-methylhexyl)amin, N-Methyl-bis(2-ethylpentyl)amin, N-Methyl-bis(3-ethylpentyl)amin, N-Methyl-bis (2-propylbutyl) amin, N-Methyl-bis(cycloheptyl)amin, N-Methyl-bis(methylcyclohexyl)amin, N-Methyl-dibenzylamin, N-Methyl-bis(2-octyl)amin, N-Methyl-bis(3-octyl)amin, N-Methylbis (4-octyl) amin, N-Methyl-bis(2-methylheptyl)amin, N-Methylbis (3-methylheptyl) amin, N-Methyl-bis(4-methylheptyl)amin, N-Methyl-bis (5-methylheptyl) amin, N-Methyl-bis(6-methylheptyl)amin, N-Methyl-bis (2-ethylhexyl) amin, N-Methyl-bis(3-ethylhexyl)amin, N-Methyl-bis(4-ethylhexyl)amin, N-Methyl-bis(2-propylpentyl)amin, N-Methyl-bis(cyclooctyl)amin, N-Methyl-bis(dimethylcyclohexyl)amin, N-Ethyl-diisopropylamin, N-Ethyl-bis(2-butyl)amin, N-Ethyl-bis(isobutyl)amin, N-Ethyl-bis(2-pentyl)amin, N-Ethylbis(3-pentyl)amin, N-Ethyl-bis(2-methylbutyl)amin, N-Ethylbis(3-methylbutyl)amin, N-Ethyl-dicyclopentylamin, N-Ethylbis (2-hexyl)amin, N-Ethyl-bis(3-hexyl)amin, N-Ethyl-bis(2-methylpentyl)amin, N-Ethyl-bis(3-methylpentyl)amin, N-Ethyl-bis(4-methylpentyl)amin, N-Ethyl-bis(2-ethylbutyl)amin, N-Ethyl-dicyclohexylamin, N-Ethyl-bis(2-heptyl)amin, N-Ethyl-bis(3-heptyl)amin, N-Ethyl-bis(4-heptyl)amin, N-Ethyl-bis(2-methylhexyl)amin, N-Ethyl-bis (3-methylhexyl) amin, N-Ethyl-bis(4-methylhexyl)amin, N-Ethyl-bis (5-methylhexyl) amin, N-Ethyl-bis (2-ethylpentyl) amin, N-Ethyl-bis (3-ethylpentyl) amin, N-Ethyl-bis(2-propylbutyl)amin, N-Ethyl-bis (cycloheptyl) amin, N-Ethyl-bis (methylcyclohexyl) amin, N-Ethyl-di(benzyl)amin, N-Ethyl-bis (2-octyl) amin, N-Ethylbis(3-octyl)amin, N-Ethyl-bis(4-octyl)amin, N-Ethyl-bis(2-methylheptyl) amin, N-Ethyl-bis(3-methylheptyl)amin, N-Ethyl-bis(4-methylheptyl) amin, N-Ethyl-bis(5-methylheptyl)amin, N-Ethylbis (6-methylheptyl) amin, N-Ethyl-bis(2-ethylhexyl)amin, N-Ethylbis (3-ethylhexyl) amin, N-Ethyl-bis(4-ethylhexyl)amin, N-Ethylbis(2-propylpentyl)amin, N-Ethyl-bis(cyclooctyl)amin, N-Ethylbis (dimethylcyclohexyl) amin.

Im Schritt 1 von Methode 2 wird ein anorganisches Trägermaterial (C) mit einer Lewis-Base der Formel (VI) umgesetzt. Vorzugsweise wird die Lewisbase der allgemeinen Formel (VI) als Lösung zu einer Suspension des Trägers gegeben. Als Lösungs- bzw. Suspensionsmittel sind insbesondere Kohlenwasserstoffe, vorzugsweise aromatische Kohlenwasserstoffe wie Toluol geeignet. Die Menge an Lewis Base der Formel (VI) kann in weiten Grenzen variieren, die Mindestmenge richtet sich nach der Anzahl der Hydroxygruppen des Trägers. Es hat sich als geeignet erwiesen, nach Trägervorbehandlung das Trägermaterial feucht in Schritt 2 einzusetzen.

Dieses Material wird nun in Schritt 2 mit einer oder mehreren der erfindungsgemäßen chemischen Verbindungen, die vorzugsweise Verbindungen der Formel (III) enthalten, umgesetzt. Es hat sich als geeignet erwiesen, nach Schritt 2 die überschüssige Lewis-Base der Formel (VI) durch Auswaschen, beispielsweise mit Kohlenwasserstoffen wie Pentan, Hexan, Ethylbenzol oder Heptan, zu entfernen und den Träger zu trocknen.

Der so hergestellte kovalent geträgerte Cokatalysator wird in Schritt 3 mit einer Reaktionsmischung, bestehend aus der metallorganischen Verbindung der Formel (IV) und einem Aluminiumalkyl der Formel (V), in Kontakt gebracht. Bevorzugt führt man die Umsetzung in Lösung durch, wobei als Lösungsmittel insbesondere Kohlenwasserstoffe, vorzugsweise aromatische Kohlenwasserstoffe wie Toluol, geeignet sind.

Eine Menge von 0.1 bis 10.Gew.-% an Metallocenkomplex, bezogen auf das anorganische Trägermaterial, ist besonders geeignet.

Die Bedingungen für die Umsetzungen der Schritte 1 bis 3 sind nicht kritisch. Temperaturen im Bereich von 20 bis 150°C und Reaktionszeiten im Bereich von 0.1 bis 20 Stunden haben sich als besonders geeignet erwiesen.

Das so hergestellte Katalysatormaterial wird abfiltriert, gegebenfalls mit Kohlenwasserstoffen wie Pentan Hexan, Ethylbenzol oder Heptan, gewaschen und bis zur Gewichtskonstanz getrocknet.

Die nachfolgenden Beispiele dienen zur näheren Erläuterung der Erfindung. In den Beispielen erfolgten Herstellung und Handhabung der Verbindungen unter Ausschluß von Luft und Feuchtigkeit unter Argon (Schlenk-Technik). Alle benötigten Lösungsmittel wurden vor Gebrauch durch mehrstündiges Sieden über geeigneten Trockenmitteln und anschließende Destillation unter Argon absolutiert. Zur Charakterisierung der Verbindungen wurden Proben aus den einzelnen Reaktionsmischungen entnommen und im Ölpumpenvakuum getrocknet.

### Beispiele

### A) Herstellung der als Cokatalysatoren geeigneten erfindungsgemäßen chemischen Produkte sowie Herstellung/Beschreibung der zum Vergleich eingesetzten Cokatalysatoren

### Beispiel 1: Cokatalysator (1)

5.0 ml Trimethylaluminium (2M in Exxol, einem Kohlenwasserstoffgemisch der Fa. Exxon, 5.4 mmol) wurden in 100 ml Toluol vorgelegt. Zu dieser Lösung wurden 3.65 g (5.4 mmol) 4,4'-Dihydroxyoctafluorodiphenylmonohydrat gegeben. Die Reaktionslösung wurde 1 Stunde bei 60°C verrührt. Das erhaltene chemische Produkt 1 wurde anschließend ohne Aufreinigung zur Trägerung eingesetzt.

### Beispiel 2: Cokatalysator (2)

8.0 ml Triethylaluminium (2M in Exxol, 5.4 mmol) wurden in 100 ml Toluol vorgelegt. Zu dieser Lösung wurden 3.65 g (5.4 mmol) 4,4'-Dihydroxyoctafluorodiphenylmonohydrat gegeben. Die Reaktionslösung wurde 1 Stunde bei 60°C verrührt. Das chemische Produkt 2 wurde anschließend ohne Aufreinigung zur Trägerung eingesetzt.

### Beispiel 3: Cokatalysator (3)

7.7 ml Triisobutylaluminium (2M in Varsol, einem Kohlenwasserstoffgemisch der Fa. Exxon, 5.4 mmol) wurden in 100 ml Toluol vorgelegt. Zu dieser Lösung wurden 3.65 g (5.4 mmol) 4,4'-Dihydroxyoctafluorodiphenylmonohydrat gegeben. Die Reaktionslösung wurde 1 Stunde bei 60°C verrührt. Das erhaltene chemische Produkt 3 wurde anschließend ohne Aufreinigung zur Trägerung eingesetzt.

### Vergleichsbeispiel 1: Cokatalysator (4)

### 30%ige toluolische Methylalumoxanlösung (Albemarle Corporation, Baton Rouge, Louisiana, USA)

### Vergleichsbeispiel 2: Cokatalysator (5) (kein Stand der Technik)

10 ml einer toluolischen Lösung von Trimethylaluminium (TMA) (2 mol/l) wurden bei Raumtemperatur tropfenweise zu einer Suspension von 20 mmol Dihydroxyoctafluorodiphenyl gegeben. Die Mischung wurde anschließend bei Raumtemperatur während drei Stunden gerührt. Als Reaktionsprodukt wurde ein 1:1-Kondensat von TMA und Dihydroxyoctafluorodiphenyl erhalten.

### B) Herstellung der geträgerten Cokatalysatoren

14.0 g SiO₂ (XPO 2107, Fa. Grace, getrocknet bei 600°C im Argonstrom) wurden in 20 ml Toluol vorgelegt, 2.6 ml N,N-Dimethylanilin (20.80 mmol) zugetropft und zwei Stunden bei Raumtemperatur gerührt. Anschließend wurden bei 0°C 20.80 mmol der entsprechenden Cokatalysatoren 1- 3, jeweils gelöst in 40 ml Toluol, zugegeben. Man ließ auf Raumtemperatur erwärmen und rührte die Suspension zwei Stunden bei dieser Temperatur. Die entstandene bläuliche Suspension wurde abfiltriert und der Rückstand mit 50 ml Toluol und anschließend mit dreimal 100 ml n-Pentan gewaschen. Danach wurde der Rückstand im Ölpumpenvakuum getrocknet. Es resultierte jeweils das geträgerte Cokatalysatorsystem, welches ausgewogen wurde.

### C) Herstellung der Katalysatorsysteme

### Erfindungsgemäße Katalysatorsysteme

Zu einer Lösung von 50 mg (80 µmol) Dimethylsilandiylbis(2-methyl-4-phenyl-indenyl)zirkoniumdichlorid in 50 ml Toluol wurden 0.30 ml Trimethylaluminium (20% ig in Exxol, 700 µmol) gegeben und die Lösung 1.5 Stunden bei Raumtemperatur gerührt. Anschließend wurden 1920 µmol/g [SiO₂] der geträgerten Cokatalysatoren 1 bis 3 von B. portionsweise zugegeben. Die Lösung wurde 60 Minuten bei Raumtemperatur gerührt. Danach entfernte man das Lösungsmittel im Ölpumpenvakuum. Es resultierte jeweils ein hellrotes frei fließendes Pulver.

### Vergleich:

### Dimethylsilandiylbis(2-methyl-4-phenyl-indenyl)zirkoniumdichlorid / MAO-System

Zu einer Lösung von 50 mg (80 µmol) Dimethylsilandiylbis(2-methyl-4-phenyl-indenyl)zirkoniumdichlorid in 50 ml Toluol wurden 0.30 ml Trimethylaluminium (20% ig in Exxol, 700 µmol) gegeben und die Lösung 1.5 Stunden bei Raumtemperatur gerührt. Anschließend wurden 1920 µmol/g [SiO₂] 30 %iger toluolischer Methylalumoxan-Lösung (Albemarle Corporation, Baton Rouge, Louisiana, USA) gemäß B. als Cokatalysator zugegeben. Die Lösung wurde 60 Minuten bei Raumtemperatur gerührt. Danach wurde das Lösungsmittel im Ölpumpenvakuum entfernt. Es resultierte ein hellrotes freifließendes Pulver.

### Vergleich:

### Dimethylsilandiylbis (2-methyl-4-phenyl-indenyl) zirkoniumdichlorid/Dihydroxyocta

### fluorodiphenyl

Zu einer Lösung von 50 mg (80 µmol) Dimethylsilandiylbis(2-methyl-4-phenyl-indenyl)zirkoniumdichlorid in 50 ml Toluol wurden 0.30 ml Trimethylaluminium (20% ig in Exxol, 700 µmol) gegeben und die Lösung 1.5 Stunden bei Raumtemperatur gerührt. Anschließend wurden 1920 µmol/g [SiO₂] von Cokatalysator (5) gegeben. Die Lösung wurde 60 Minuten bei Raumtemperatur gerührt. Danach wurde das Lösungsmittel am Ölpumpenvakuum entfernt. Es resultierte ein hellrotes frei fließendes Pulver.

### D) Polymerisation

Zum Einschleusen in das Polymerisationssystem wurde die entsprechende Menge des unter B hergestellten geträgerten Katalysatorsystems (16 µmol Metallocen) in 30 ml Exxol erneut suspendiert. Parallel dazu wurde ein trockener 16-dm³-Reaktor zunächst mit Stickstoff und anschließend mit Propylen gespült und mit 10 dm³ flüssigem Propen befüllt. Dann wurden 0.5 cm³ einer 20%igen Triisobutylaluminiumlösung in Varsol mit 30 cm³ Exxol verdünnt in den Reaktor gegeben und der Ansatz bei 30°C 15 Minuten gerührt. Anschließend wurde die Katalysatorsuspension in den Reaktor gegeben. Das Reaktionsgemisch wurde auf die Polymerisationstemperatur von 60°C aufgeheizt (4°C/min) und das Polymerisationssystem 1 h durch Kühlung bei 60°C gehalten. Gestoppt wurde die Polymerisation durch Abgasen des restlichen Propylens. Das erhaltene Polymer wurde im Vakuumtrockenschrank getrocknet. Der Reaktor zeigte keine Beläge an der Innenwand oder Rührer. Die Ergebnisse der Polymerisation sind in der folgenden Tabelle zusammengefaßt. Diese Ergebnisse belegen, daß bei Verwendung der erfindungsgemäßen chemischen Produkte als Cokatalysator eine höhere Polymerisationsaktivität gefunden wird.

| Getr. Katalysatorsystem hergestellt mit Cokatalysator Nr. | 1 | 2 | 3 | 4 | 5 |
|---|---|---|---|---|---|
| Metallocenmenge [mg] | 50 | 50 | 50 | 50 | 50 |
| Metallocen (µmol) | 80 | 80 | 80 | 80 | 80 |
| Cokatalysator (µmol) | 1920 | 1920 | 1920 | 1920 | 1920 |
| Auswaage Katalysator-system [mg] | 1000 | 1000 | 1000 | 1000 | 1000 |
| Einwaage Katalysator-system für Polymeri-sation [mg] [16 µmol Metallocen] | 200 | 200 | 200 | 200 | 200 |
| Dauer (min) | 60 | 60 | 60 | 60 | 60 |
| PP(kg) | 0.62 | 0.78 | 0.58 | 0.41 | 0.18 |

Als Cokatalysator geeignete chemische Produkte, Verfahren zu ihrer Herstellung und ihre Verwendung in Katalysatorsystemen zur Herstellung von Polyolefinen

## Patentansprüche

1. Als Cokatalysator geeignete chemische Produkte, welche erhältlich sind durch Umsetzung einer Verbindung der Formel (I),
M¹R¹R²(R³)ₘ (I),
worin
R¹, R², R³ gleich oder verschieden sind und ein Wasserstoffatom, C₁-C₂₀-Alkyl, C₁-C₂₀-Halogenalkyl, C₆-C₂₀-Aryl, C₆-C₂₀-Halogenaryl, C₇-C₄₀-Arylalkyl, C₇-C₄₀-Halogenarylalkyl, C₇-C₄₀-Alkylaryl oder C₇-C₄₀-Halogenalkylaryl,
M¹ ein Element der II. oder III. Hauptgruppe des Periodensystems der Elemente, und
m 0 oder 1 bedeuten, wobei m gleich 1 ist, wenn M¹ ein Element der III. Hauptgruppe ist, und m gleich 0 ist, wenn M¹ ein Element der II. Hauptgruppe ist,
mit einer Verbindung der Formel (II),
(R⁴X)_{q}-(G) * (M²R⁵R⁶)_{g} (II),
in der sich an einem Grundkörper G heteroatomhaltige Substituenten R⁴X befinden, worin
R⁴ gleich oder verschieden sind und Wasserstoff, C₁-C₂₀-Alkyl, C₁-C₂₀-Halogenalkyl, C₆-C₂₀-Aryl, C₆-C₂₀-Halogenaryl, C₇-C₄₀-Arylalky, C₇-C₄₀-Halogenarylalkyl, C₇-C₄₀-Alkylaryl, C₇-C₄₀-Halogenalkyl-aryl,
X ein Element der VI. Hauptgruppe des Periodensystems der Elemente,
G mindestens zweibindiges C₁-C₂₀-Halogenalkylen, C₆-C₄₀-Halogenarylen, C₇-C₄₀-Halogenarylalkylen, C₇-C₄₀-Halogenalkylarylen,
M² ein Element der VI. Hauptgruppe des Periodensystems der Elemente,
R⁵, R⁶ unabhängig voneinander gleich oder verschieden sind und ein Wasserstoffatom, C₁-C₂₀-Alkyl, C₁-C₁₀-Alkoxy, C₂=C₁₀-Alkenyl, C₇-C₂₀-Arylalkyl, C₇-C₂₀-Alkylaryl, C₆-C₁₀-Aryloxy, C₁-C₁₀-Halogenalkyl,
q eine ganze Zahl zwischen 2 und 10, und
g eine ganze Zahl zwischen 1 und 10 ist.

2. Chemische Produkte gemäß Anspruch 1, **dadurch gekennzeichnet, daß**
X und M² Sauerstoff und
R⁴, R⁵ und R⁶ Wasserstoff sind.

3. verfahren zur Herstellung eines als Cokatalysator geeigneten chemischen Produktes durch Umsetzung einer verbindung der Formel (I),
M¹R¹R²(R³)ₘ (I),
worin
R¹, R², R³ gleich oder verschieden sind und ein Wasserstoffatom, C₁-C₂₀-Alkyl, C₁-C₂₀-Halogenalkyl, C₆-C₂₀-Aryl, C₆-C₂₀-Halogenaryl, C₇-C₄₀-Arylalkyl, C₇-C₄₀-Halogenarylalkyl, C₇-C₄₀-Alkylaryl oder C₇-C₄₀-Halogenalkylaryl,
M¹ ein Element der II. oder III. Hauptgruppe des Periodensystems der Elemente, und
m 0 oder 1 bedeuten, wobei m gleich 1 ist, wenn M¹ ein Element der III. Hauptgruppe ist, und m gleich 0 ist, wenn M¹ ein Element der II. Hauptgruppe ist,
mit einer verbindung der Formel (II),
(R⁴X)_{q}-(G) * (M²R⁵R⁶)_{g} (II),
in der sich an einem Grundkörper G heteroatomhaltige Substituenten R⁴X befinden, worin
R⁴ gleich oder verschieden sind und Wasserstoff, C₁-C₂₀-Alkyl, C₁-C₂₀-Halogenalkyl, C₆-C₂₀-Aryl, C₆-C₂₀-Halogenaryl, C₇-C₄₀-Arylalky, C₇-C₄₀-Halogenarylalkyl, C₇-C₄₀-Alkylaryl, C₇-C₄₀-Halogenalkylaryl,
X ein Element der VI. Hauptgruppe des Periodensystems der Elemente,
G mindestens zweibindiges C₁-C₂₀-Halogenalkylen, C₆-C₄₀-Halogenarylen, C₇-C₄₀-Halogenarylalkylen, C₇-C₄₀-Halogenalkylarylen,
M² ein Element der VI. Hauptgruppe des Periodensystems der Elemente,
R⁵, R⁶ unabhängig voneinander gleich oder verschieden sind und ein Wasserstoffatom, C₁-C₂₀-Alkyl, C₁-C₁₀-Alkoxy, C₂-C₁₀-Alkenyl, C₇-C₂₀-Arylalkyl, C₇-C₂₀-Alkylaryl, C₆-C₁₀-Aryloxy, C₁-C₁₀-Halogenalkyl,
q eine ganze Zahl zwischen 2 und 10, und
g eine ganze Zahl zwischen 1 und 10 ist.

4. Katalysatorsystem, umfassend die durch Umsetzung von Verbindungen der Formel (I) und Verbindungen der Formel (II) erhältlichen chemischen Produkte nach Anspruch 1 oder 2 als Cokatalysator.

5. Katalysatorsystem nach Anspruch 4, **dadurch gekennzeichnet, daß** es
A) mindestens eine Organoübergangsmetallverbindung,
B) optional mindestens ein Hauptgruppenalkyl,
C) optional mindestens eine Trägerkomponente, und
D) mindestens ein durch Umsetzung von Verbindungen der Formel (I) mit Verbindungen, der Formel (II) erhältliches chemisches Produkt umfaßt.

6. Katalysatorsystem nach Anspruch 4 oder 5, **dadurch gekennzeichnet, daß** es
A) mindestens ein Metallocen,
B) optional mindestens eine Lewis Base der Formel (VI) enthält,
M⁶R²¹R²²R²³ (VI),
worin
M⁶ für ein Element der V. Hauptgruppe des Periodensystems der Elemente steht,
R²¹, R²², R²³ gleich oder verschieden sind und für ein Wasserstoffatom, eine C₁-C₂₀-Alkyl-, C₁-C₂₀-Halogenalkyl-, C₆-C₄₀-Aryl-, C₆-C₄₀-Halogenaryl-, C₇-C₄₀-Alkylaryloder C₇-C₄₀-Arylalkyl-Gruppe stehen, wobei gegebenenfalls zwei Reste oder alle drei Reste R²¹, R²² und R²³ über C₂-C₂₀-Kohlenstoffeinheiten miteinander verbunden sein können, wobei mindestens ein Rest R²¹, R²² oder R²³ kein Wasserstoffatom oder keine lineare Alkylkette darstellt.

7. Verfahren zur Herstellung eines Polyolefins durch Polymerisation einer oder mehrerer Olefine in Gegenwart eines Katalysatorsystemes, **dadurch gekennzeichnet, daß** ein Katalysatorsystem gemäß einem der Ansprüche 4 bis 6 eingesetzt wird.

## Revendications

1. Produits chimiques pouvant être utilisés en tant que co-catalyseurs, qui peuvent être obtenus par réaction d'un composé de formule (I)
M¹R¹R²(R³)ₘ (I)
dans laquelle
R¹, R² et R³ sont identiques ou différents et représentent chacun un atome d'hydrogène, un groupe alkyle en C₁-C₂₀, halogènalkyle en C₁-C₂₀, aryle en C₆-C₂₀, halogènaryle en C₆-C₂₀, arylalkyle en C₇-C₄₀, halogènarylalkyle en C₇-C₄₀, alkylaryle en C₇-C₄₀ ou halogènalkylaryle en C₇-C₄₀,
M¹ est un élément du Ier ou du IIème groupe principal du Tableau Périodique des Eléments, et
m vaut 0 ou 1, m valant 1 quand M¹ est un élément du IIIème groupe principal, et m valant 0 quand M¹ est un élément du IIème groupe principal,
avec un composé de formule (II)
(R⁴X)_{q}-(G) * (M2R⁵R⁶)_{g} (II)
dans laquelle des substituants hétéroatomiques R⁴X se trouvent sur une structure de base G, formule dans laquelle
les radicaux R⁴ sont identiques ou différents et représentent chacun un atome d'hydrogène, un groupe alkyle en C₁-C₂₀, halogènalkyle en C₁-C₂₀, aryle en C₆-C₂₀, halogènaryle en C₆-C₂₀, arylalkyle en C₇-C₄₀, halogènarylalkyle en C₇-C₄₀, alkylaryle en C₇-C₄₀, halogènalkylaryle en C₇-C₄₀,
X est un élément du VIème groupe principal du Tableau Périodique des Eléments,
G est un radical au moins divalent halogènalkylène en C₁-C₂₀, halogènarylène en C₆-C₄₀, halogènarylkylène en C₇-C₄₀, halogènalkylarylène en C₇-C₄₀,
M² est un élément du VIème groupe principal du Tableau Périodique des Eléments,
R⁵, R⁶ sont identiques ou différents indépendamment l'un de l'autre, et représentent chacun un atome d'hydrogène et un groupe alkyle en C₁-C₂₀, alcoxy en C₁-C₁₀, alcényle en C₂-C₁₀, arylalkyle en C₇-C₂₀, alkylaryle en C₇-C₂₀, aryloxy en C₆-C₁₀, halogènalkyle en C₁-C₁₀,
q est un nombre entier de 2 à 10, et
g est un nombre entier de 1 à 10.

2. Produits chimiques selon la revendication 1, **caractérisés en ce que**
X et M² représentent chacun un atome d'hydrogène, et
R⁴, R⁵ et R⁶ sont des atomes d'hydrogène.

3. Procédé de préparation d'un produit chimique pouvant être utilisé en tant que co-catalyseur, par réaction d'un composé de formule (I)
M¹R¹R²(R³)ₘ (I)
dans laquelle
R¹, R² et R³ sont identiques ou différents et représentent chacun un atome d'hydrogène, un groupe alkyle en C₁-C₂₀, halogènalkyle en C₁-C₂₀, aryle en C₆-C₂₀, halogènaryle en C₆-C₂₀, arylalkyle en C₇-C₄₀, halogènarylalkyle en C₇-C₄₀, alkylaryle en C₇-C₄₀ ou halogènalkylaryle en C₇-C₄₀,
M¹ est un élément du Ier ou du IIème groupe principal du Tableau Périodique des Eléments, et
m vaut 0 ou 1, m valant 1 quand M¹ est un élément du IIIème groupe principal, et m valant 0 quand M¹ est un élément du IIème groupe principal,
avec un composé de formule (II)
(R⁴X)_{q}-(G) * (M²R⁵R⁶)_{g} (II)
dans laquelle des substituants hétéroatomiques R⁴X se trouvent sur une structure de base G, formule dans laquelle
les radicaux R⁴ sont identiques ou différents et représentent chacun un atome d'hydrogène, un groupe alkyle en C₁-C₂₀, halogènalkyle en C₁-C₂₀, aryle en C₆-C₂₀, halogènaryle en C₆-C₂₀, arylalkyle en C₇-C₄₀, halogènarylalkyle en C₇-C₄₀, alkylaryle en C₇-C₄₀, halogènalkylaryle en C₇-C₄₀,
X est un élément du VIème groupe principal du Tableau Périodique des Eléments,
G est un radical au moins divalent halogènalkylène en C₁-C₂₀, halogènarylène en C₆-C₄₀, halogènarylkylène en C₇-C₄₀, halogènalkylarylène en C₇-C₄₀,
M² est un élément du VIème groupe principal du Tableau Périodique des Eléments,
R⁵, R⁶ sont identiques ou différents indépendamment l'un de l'autre, et représentent chacun un atome d'hydrogène et un groupe alkyle en C₁-C₂₀, alcoxy en C₁-C₁₀, alcényle en C₂-C₁₀, arylalkyle en C₇-C₂₀, alkylaryle en C₇-C₂₀, aryloxy en C₆-C₁₀, halogènalkyle en C₁-C₁₀,
q est un nombre entier de 2 à 10, et
g est un nombre entier de 1 à 10.

4. Système catalyseur comprenant en tant que co-catalyseur les produits chimiques, pouvant être obtenus par réaction de composés de formule (I) et de composés de formule (II), selon la revendication 1 ou 2.

5. Système catalyseur selon la revendication 4, **caractérisé en ce qu'**il comprend
A) au moins un composé organique d'un métal de transition,
B) éventuellement au moins un groupe principal alkyle,
C) éventuellement au moins un composant support et
D) au moins un produit chimique pouvant être obtenu par réaction de composés de formule (I) avec des composés de formule (II).

6. Système catalyseur selon la revendication 4 ou 5, **caractérisé en ce qu'**il contient
A) au moins un métallocène,
B) éventuellement au moins une base de Lewis de formule (VI)
M⁶R²¹R²²R²³ (VI)
dans laquelle
M⁶ est un élément du Vème groupe principal du Tableau Périodique des Eléments,
R²¹, R²², R²³ sont identiques ou différents et représentent chacun un atome d'hydrogène, un groupe alkyle en C₁-C₂₀, halogènalkyle en C₁-C₂₀, aryle en C₆-C₄₀, halogènaryle en C₆-C₄₀, alkylaryle en C₇-C₄₀ ou arylalkyle en C₇-C₄₀, éventuellement deux radicaux ou les trois radicaux R²¹, R²² et R²³ pouvant être reliés les uns aux autres par l'intermédiaire de motifs carbonés en C₂-C₂₀, au moins l'un des radicaux R²¹, R²² ou R²³ ne représentant pas un atome d'hydrogène ou une chaîne alkyle droite.

7. Procédé de préparation d'une polyoléfine par polymérisation d'une ou plusieurs oléfines en présence d'un système catalyseur, **caractérisé en ce qu'**on utilise un système catalyseur selon l'une des revendications 4 à 6.

## Claims

1. A chemical product suitable as cocatalyst which is obtainable by reacting a compound of the formula (I),
M¹R¹R²(R³)ₘ (I),
where
R¹, R², R³ are identical or different and are each hydrogen, C₁-C₂₀-alkyl, C₁-C₂₀-haloalkyl, C₆-C₂₀-aryl, C₆-C₂₀-haloaryl, C₇-C₄₀-arylalkyl, C₇-C₄₀-haloarylalkyl, C₇-C₄₀-alkylaryl or C₇-C₄₀-haloalkylaryl,
M¹ is an element of main group II or III of the Periodic Table of the Elements and
m is 0 or 1, with m being 1 when M¹ is an element of main group III and m being 0 when M¹ is an element of main group II,
with a compound of the formula (II),
(R⁴X)_{q}-(G) * (M²R⁵R⁶)_{g} (II),
in which heteroatom-containing substituents R⁴X are located on a parent moiety G, where
R⁴ are identical or different and are each hydrogen, C₁-C₂₀-alkyl, C₁-C₂₀-haloalkyl, C₆-C₂₀-aryl, C₆-C₂₀-haloaryl, C₇-C₄₀-arylalkyl, C₇-C₄₀-haloarylalkyl, C₇-C₄₀-alkylaryl, C₇-C₄₀-haloalkylaryl,
X is an element of main group VI of the Periodic Table of the Elements,
G is at least divalent C₁-C₂₀-haloalkylene, C₆-C₄₀-haloarylene, C₇-C₄₀-haloarylalkylene, C₇-C₄₀-haloalkylarylene,
M² is an element of main group VI of the Periodic Table of the Elements,
R⁵, R⁶ are identical or different and are each hydrogen, C₁-C₂₀-alkyl, C₁-C₁₀-alkoxy, C₂-C₁₀-alkenyl, C₇-C₂₀-arylalkyl, C₇-C₂₀-alkylaryl, C₆-C₁₀-aryloxy, C₁-C₁₀-haloalkyl,
q is an integer from 2 to 10 and
g is an integer from 1 to 10.

2. A chemical product as claimed in claim 1, wherein
X and M² are each oxygen and
R⁴, R⁵ and R⁶ are each hydrogen.

3. A process for preparing a chemical product suitable as cocatalyst by reacting a compound of the formula (I),
M¹R¹R²(R³)ₘ (I),
where
R¹, R², R³ are identical or different and are each hydrogen, C₁-C₂₀-alkyl, C₁-C₂₀-haloalkyl, C₆-C₂₀-aryl, C₆-C₂₀-haloaryl, C₇-C₄₀-arylalkyl, C₇-C₄₀-haloarylalkyl, C₇-C₄₀-alkylaryl or C₇-C₄₀-haloalkylaryl,
M¹ is an element of main group II or III of the Periodic Table of the Elements and
m is 0 or 1, with m being 1 when M¹ is an element of main group III and m being 0 when M¹ is an element of main group II,
with a compound of the formula (II),
(R⁴X)_{q}-(G) * (M²R⁵R⁶)_{g} (II),
in which heteroatom-containing substituents R⁴X are located on a parent moiety G, where
R⁴ are identical or different and are each hydrogen, C₁-C₂₀-alkyl, C₁-C₂₀-haloalkyl, C₆-C₂₀-aryl, C₆-C₂₀-haloaryl, C₇-C₄₀-arylalkyl, C₇-C₄₀-haloarylalkyl, C₇-C₄₀-alkylaryl, C₇-C₄₀-haloalkylaryl,
X is an element of main group VI of the Periodic Table of the Elements,
G is at least divalent C₁-C₂₀-haloalkylene, C₆-C₄₀-haloarylene, C₁-C₄₀-haloarylalkylene, C₇-C₄₀-haloalkylarylene,
M² is an element of main group VI of the Periodic Table of the Elements,
R⁵, R⁶ are identical or different and are each hydrogen, C₁-C₂₀-alkyl, C₁-C₁₀-alkoxy, C₂-C₁₀-alkenyl, C₇-C₂₀-arylalkyl, C₇-C₂₀-alkylaryl, C₆-C₁₀-aryloxy, C₁-C₁₀-haloalkyl,
q is an integer from 2 to 10 and
g is an integer from 1 to 10.

4. A catalyst system comprising, as cocatalyst, a chemical product as claimed in claim 1 or 2 obtainable by reacting compounds of the formula (I) with compounds of the formula (II).

5. A catalyst system as claimed in claim 4 comprising
A) at least one organic transition metal compound,
B) if desired, at least one main group alkyl,
C) if desired, at least one support component, and
D) at least one chemical product obtainable by reacting compounds of the formula (I) with compounds of the formula (II).

6. A catalyst system as claimed in claim 4 or 5 comprising
A) at least one metallocene, and
B) if desired, at least one Lewis base of the formula (VI),
M⁶R²¹R²²R²³ (VI),
where
M⁶ is an element of main group V of the Periodic Table of the Elements,
R²¹, R²², R²³ are identical or different and are each hydrogen, C₁-C₂₀-alkyl, C₁-C₂₀-haloalkyl, C₆-C₄₀-aryl, C₆-C₄₀-haloaryl, C₇-C₄₀-alkylaryl or C₇-C₄₀-arylalkyl, where two radicals or all three radicals R²¹, R²² and R²³ may be joined to one another via C₂-C₂₀ units, and at least one radical R²¹, R²² or R²³ is not a hydrogen atom or a linear alkyl chain.

7. A process for preparing a polyolefin by polymerization of one or more olefins in the presence of a catalyst system as claimed in any of claims 4 to 6.
